# EUROPÄISCHE PATENTSCHRIFT

(11) **EP 4 056 468 B1**
(45) Veröffentlichungstag und Bekanntmachung des Hinweises auf die Patenterteilung: **10.07.2024**
(21) Anmeldenummer: 22000052.5
(22) Anmeldetag: 07.03.2022
(51) Int. Cl.: B25J 11/00, B64C 39/02, H02G 11/02, B66D 1/74

(54) **SERVICEROBOTER MIT WINDE**
SERVICE ROBOT WITH WINCH
ROBOT DE SERVICE POURVU DE TREUIL

(30) Priorität: 07.03.2021 DE 102021105445; 22.06.2021 DE 102021116178
(43) Veröffentlichungstag der Anmeldung: 14.09.2022
(60) Teilanmeldung: 24000049.7
(73) Patentinhaber: MetraLabs GmbH Neue Technologien und Systeme, 98693 Ilmenau (DE)
(72) Erfinder: Beuster, Niklas, Ilmenau (DE); Döring, Benjamin, Ilmenau (DE); Sode, Adrian, Ilmenau (DE)

(56) Entgegenhaltungen:
- WO-A1-2019/067788
- WO-A1-2019/178388
- CN-A- 109 626 143
- US-A- 3 717 325
- US-A1- 2004 167 682
- US-A1- 2014 263 852
- US-A1- 2020 369 406

## Beschreibung

### Gebiet der Erfindung

Die Erfindung bezieht sich auf einen Serviceroboter und dafür notwendige Komponenten, in besonderem Fall eine Winde, die es erlaubt, ein Seil, Schlauch oder Kabel störungsfrei auf- und abzuwickeln.

### Hintergrund der Erfindung

Die Erfindung bezieht sich auf einen mobilen Serviceroboter, der sich bevorzugt autonom bewegt und zu Inventurzwecken eingesetzt wird, bspw. in Lagern. Die Inventur erfolgt hierbei über eine Kamera oder andere geeignete Sensoren, die es erlauben, eine Ware zu erfassen. Dabei sind die Kamera bzw. die anderen geeigneten Sensoren an einer Drohne angebracht, die vom Serviceroboter aus bspw. mit Strom versorgt wird. Unter einer Drohne wird ein unbemanntes Fluggerät verstanden. Im Fall einer kabelgebundenen Verbindung zwischen mobilem Serviceroboter und Drohne ist die technische Aufgabe, das Verbindungskabel relativ straff zu halten, um bspw. zu verhindern, dass sich das Kabel (bspw. durch loses Aufwickeln) verhakt und somit die Drohne nicht mehr richtig aufsteigen kann, womit eine Systemstörung vorliegt. Eine alternative bzw. ergänzende technische Aufgabe ist es, über die Länge des abgewickelten Kabels bspw. die Flughöhe der Drohne zu ermittelt. Im Ergebnis muss das Kabel störungsfrei auf- und abgewickelt werden und/oder die Länge des geförderten Kabels muss zuverlässig bestimmt werden. Der erfindungsgemäße Gegenstand umfasst einen Serviceroboter mit einer Windenanordnung, die genau diesen Zweck erfüllt und die zudem kostengünstig zu fertigen ist.

WO2019178388 beschreibt ein Abwicklungsapparat für ein Kabel, an dem eine Drohne befestigt ist, welches auf- und abgewickelt werden kann. Der Abwicklungsapparat verfügt ferner über eine Kabelaufnahmevorrichtung und eine Kabeltransportvorrichtung. Es gibt zudem eine Windensteuerung. Auch werden limitierende Schalter beschrieben, die ausgelöst werden, wenn ein Kabelführungselement (in dem Fall als Kopfeinheit bezeichnet) eine bestimmte Position auf einer Führungsschiene erreicht hat, wobei die Führungsschiene sicherstellen soll, dass eine gleichmäßige, - einlagige Wicklung des Kabels auf einer Spule erfolgt.

US2004167682 beschreibt einen mobilen Roboter, der über eine Drohne verfügt, die über ein Kabel mit Strom versorgt wird, jedoch nicht über Schalter zum Stoppen des Abwicklungsvorgangs, sondern lediglich indirekt über Sensoren zur Bestimmung der Abwicklungslänge des Kabels, die wiederum über eine Windensteuerung gesteuert wird.

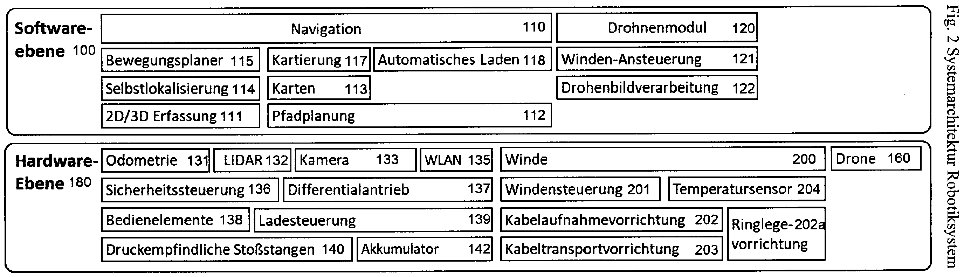

US3717325A beschreibt eine Kabelwickelvorrichtung mit einem Kabelaufnahmekorb für ein Kabel, wobei die Achse des Kabelaufnahmekorbs vertikal ausgerichtet ist. Es gibt ein axial guide 51 als mittelzentriertes Rohr (siehe Fig. 2), dass gerade nach unten reicht. Die Kabelführung innerhalb des Kabelaufnahmekorbserfolgt gar nicht bzw. soll möglicherweise durch die Korbform erfolgen (central guide member 53), dazu auch "the cable C is trained over a double capstan 50 and its other end extends downwardly through an axial guide 51 into a generally cylindrical container 52 having a central guide member 53".

CN109626143 beschreibt eine Kabelabwicklungs- und Kabelaufnahmevorrichtung, mit einem Kabelaufnahmekorb, der über Lüftungslöcher verfügt sowie Windenlüfter. Auch wird das Kabel durch mehrere aneinandergepresse Räder geführt.

Bei US2014263852 handelt es sich um eine Kabelaufnahme- und Kabelabwicklungvorrichtung für eine mit einem Kabel verbundene Drohne. Es befinden sich bspw. auch Lüftungslöcher im Kabelaufnahmekorb. Das Kabel wird durch mehrere Kabelpaare, teilweise auch mit Sensorik, hindurchgeführt, um darüber die Abwicklungslänge zu bestimmen.

### Beschreibung der Erfindung

Beim Serviceroboter handelt es sich um eine mobile, auf Rädern gelagerte Plattform, die selbstangetrieben autonom agieren kann. Dies wird durch Sensoren erreicht, die das Umfeld der Plattform erfassen, bspw. Kameras und/oder Laserscanner, in einem Aspekt auch Infrarot-Time-of-Flight Sensoren, Radar und/oder Ultraschall. Diese detektieren Hindernisse, die bspw. im Rahmen eines Kartierungsvorgangs abgespeichert werden, wobei eine Karte des Umfelds erstellt wird. Nach Kartierung erfolgt anhand der Karte eine autonome Navigation. Ergänzend zu dieser Sensorik verfügt der Serviceroboter über eine Odometrieeinheit, die es erlaubt, auf Basis ermittelter Umdrehungen der Räder (bspw. gemessen mittels Encoder) und/oder mindestens eines Inertialsensors die Position im Raum zu ermitteln. Der Serviceroboter fährt autonom zu einer Ladestation, um den integrierten Akkumulator zu laden, wenn dieser einen Mindestladezustand unterschritten hat.

Der Serviceroboter agiert als Operationsplattform für eine Drohne, die mit Sensoren das Umfeld erfasst und Daten bereitstellt bzw. aufbereitet, um Objekte im Umfeld zu identifizieren und lokalisieren. Dabei wird die Drohne vom Serviceroboter aus mit Energie versorgt.

Der Serviceroboter ist, in einem Aspekt, über ein Kabel mit einer Drohne verbunden, die über das Kabel mit Strom versorgt wird und im Umfeld des Serviceroboters im Luftraum agieren kann. In einem Aspekt wird das Kabel auch zur Übertragung von Signalen genutzt, bspw. Steuersignalen zur Positionssteuerung der Drohne, zum Ansteuern von Sensoren der Drohne wie bspw. Kameras und/oder zum Übertragen von Bildinformationen, die bspw. vom Sensor der Kamera erstellt wurden.

Um die Leistungsaufnahme der Drohne und damit auch die Gesamtbetriebsdauer des Systems zu verlängern (bspw. gemessen anhand der Intervalle zwischen zwei Ladevorgängen des Serviceroboters), soll das Kabel zwischen Drohne und Serviceroboter eine möglichst geringe Länge und damit auch Gewicht aufweisen, dass durch die Drohne getragen werden muss. Dies setzt voraus, dass sich das Kabel, welches sich nicht in der Luft befindet, im, auf oder am Serviceroboter positioniert ist. Würde bspw. das Kabel fest an Drohne und Serviceroboter verbunden sein ohne weitere, eingreifende Mittel, bestünde die Gefahr, dass das Kabel bspw. auf den Boden gerät, vom Serviceroboter überrollt wird und damit in seiner verfügbaren Länge beschränkt wird. Daher ist es notwendig, dass das Kabel bedarfsgerecht auf- und abgewickelt wird, um eine gewisse Straffheit des Kabels zu gewährleisten und damit sicherzustellen, dass es sich nicht irgendwo verhakt.

Eine Möglichkeit der Umsetzung wäre eine Spule oder Rolle mit einem Federmechanismus (über eine Feder, ggf. auch eine Motorsteuerung), der eine Mindestzugkraft voraussetzt, um das Kabel abzuwickeln. Diese Mindestzugkraft müsste durch die Drohne erbracht werden, was wiederum mit einem erhöhen Energieverbrauch einhergeht. Auch müsste dabei sichergestellt werden, dass das Kabel gleichmäßig aufgewickelt wird, um ein einfaches Abwickeln während des Betriebs zu gewährleisten.

Die erfindungsgemäße Winde besteht aus einer Kabelaufnahmevorrichtung wie bspw. einem Kabelaufnahmekorb, der vorzugsweise rund ist und nach oben hin geöffnet ist. Dieser Kabelaufnahmekorb ist im Serviceroboter fixiert. Daneben verfügt die Winde über eine Kabeltransportvorrichtung, aus der das Kabel (ggf. über Umlenkmechanismen) den Kabelaufnahmekorb erreicht.

Um ein sauberes Auf- und Abwickeln des Kabels zu ermöglichen, wird in der Kabeltransportvorrichtung das Kabel über mindestens ein Räderpaar bewegt, darunter einem Kabel-Antriebsrad und einem Kabel-Anpressrad. Diese sind so angeordnet, dass zwischen diesem Räderpaar das Kabel beweglich angeordnet ist und sich bei Bewegung des Kabel-Antriebsrads entweder auf- oder abwickeln lässt. Es können je nach Anordnung auch mehrere solche Räderpaare vorhanden sein, so dass das Kabel zunächst ein Räderpaar, dann das nächste Räderpaar durchläuft. Dabei handelt es sich in einem Aspekt bei einem Rad aus dem Räderpaar um ein Kabel-Antriebsrad. Um die Abwickellänge des Kabels (oder komplementär die Aufwickellänge) und damit ggf. die Höhe der Drohne über dem Roboter bestimmen zu können, ist die Winde so gestaltet, dass in einem Aspekt der Motor über Encoder verfügt, in einem alternativen und/oder ergänzenden Aspekt ein Kabel-Anpressrad. Dabei kann sich der Encoder in einem Aspekt im Räderpaar befinden mit dem Kabel-Antriebsrad oder im, vom Verlauf des Kabels gesehen, entweder vor- oder nachgelagerten Räderpaar. Bevorzugt erfolgt die Längenmessung des Kabels getrennt vom Kabelvortrieb, da sonst kein Schlupf erkannt werden kann, was jedoch nötig ist, da sich Messfehler durch Schlupf aufsummieren würden (solange die Drohne nicht landet). Die Messvorrichtung wäre auch nicht in der Lage festzustellen, ob das Kabel irgendwo blockiert wurde. Informationen direkt vom Motor sind in dieser Hinsicht unzuverlässig. Aus diesem Grund befindet sich der Encoder bevorzugt an einem Rad eines zweiten Radpaares. Alternativ oder ergänzend kann sich der Encoder an der Wickelvorrichtung des Kabels befinden, und zwar derart, dass der Encoder die Rotation abgreift, die durch das Ablegen des Kabels in den Kabelaufnahmekorb entsteht. Gemäß der beanspruchten Erfindung wird dabei das Kabel durch ein Ringleger-Führungselement und dann einen Ringleger geleitet, welche durch den Kabelvortrieb und damit assoziierte Reibungskräfte in Rotation versetzt werden. Hierbei kann ein Encoder entsprechend die Rotation des Ringleger-Führungselementes abgreifen, bspw. durch eine Welle, die die Rotation bis zu diesem Encoder überträgt. In einem Aspekt kann auch mehr als ein Encoder genutzt werden, bspw. ein Encoder zur sehr präzisen Messung des Kabelvortriebs an einem Räderpaar, bspw. am Kabel-Antriebsrad-Anpressrad-Räderpaar (konkret bspw. davon am Anpressrad), sowie weiterhin ein Encoder, der weniger schlupfanfällig ist, der die Rotation des Ringlegers über eine Ringleger-Führungselement-Encoder-Welle abgreift. In einem Aspekt werden die Messwerte des ersten Encoders am Räderpaar genutzt zur Messung der Abwicklungslänge des Kabels. Die Messwerte des zweiten Encoders werden zu Vergleichszwecken genutzt. Wird eine Messabweichung zwischen beiden Räderpaaren festgestellt, die bspw. über einem Schwellwert liegt, wird der Wert für die Abwicklungslänge des Kabels auf den Wert des zweiten Encoders gesetzt, der weniger anfällig für Schlupf ist.

Der Encoder wird über die Winden-Ansteuerungseinheit ausgewertet. Die vertikale Position der Drohne kann, in einem Aspekt, über die Länge des abgewickelten Kabels zumindest anteilig ermittelt werden, d.h. über die Zahl der Umdrehungen der Wickelvorrichtungen, wobei der Umfang der Räder, die die Wicklung vornehmen, mit der Zahl der Umdrehungen multipliziert wird, um die Länge der Abwicklung zu ermitteln. Hierbei kann unter der Wickelvorrichtung einerseits der Kabelvortriebsmechanimus verstanden werden, anderseits der Kabelablegmechanismus. Beim Kabelvortriebmechanismus können Kabel-Antriebsrad oder Anpressrad mit einem Encoder ausgestattet sein, beim Kabelablegmechanismus ein Ringleger bzw. ein mit diesem verbundenes, drehbar gelagertes Ringleger-Führungselement. Die Rotationachsen der genutzten Encoder können senkrecht aufeinander stehen. Die Rotationsachsen der genutzten Encoder können auch auf unterschiedlichen Wirkmechanismen beruhen, z.B. auf dem Kabelvortrieb radial zum Encoder (bspw. beim Encoder im Kabelvortriebsmechanismus) oder dem Kabelvortrieb zumindest anteilig axial zum Encoder, bspw. dann, wenn der Encoder die Rotation des Ringlegers abgreift.

Hin zu der Seite, auf der das Kabel den Roboter verlässt (auf direktem Weg, bspw. nach oben gerichtet; auf indirektem Weg, bspw. mittels Umlenkrolle für das Kabel, über das es den Serviceroboter nach oben verlässt, etc.), verläuft das Kabel durch ein windenabseitiges Führungselement, in einem Aspekt ein gefedertes Element. Bei diesem windenabseitigen Führungselement handelt es sich bspw. um ein Rohr oder eine Öffnung in einem Gehäuseteil, einem Federblech bzw. einer Formfeder, etc. Das windenabseitige Führungselement ist bspw. im Fall eines Rohrs so gestaltet, dass es beweglich gelagert ist, bspw. mit einem Federungsmechanismus in einer Position gehalten wird. Das Kabel selbst verfügt am äußeren Ende (mit Abstand zur Drohne) über eine Stoppvorrichtung. Dabei kann es sich um einen Knoten im Kabel handeln, eine aufgeschraubte Hülle, einen Magnetring, etc. Diese verhindert, dass das Kabel beim Aufwickeln zu weit in das windenabseitige Führungselement hineingezogen wird. Trifft die Stoppvorrichtung auf das Führungselement, so wird durch den Wickelvorgang das Führungselement derart bewegt (bspw. in Wickelrichtung), dass die Feder zusammengepresst wird und sich das windenabseitige Führungselement in Wickelrichtung bewegt. Dabei löst es direkt oder indirekt einen Kabelanfangs-Schalter aus, dessen Signal durch die Windensteuerung ausgewertet wird. In einem alternativen Aspekt, bei dem es sich beim windenabseitigen Führungselement um ein Federblech bzw. eine Formfeder handelt, wird das Federblech bzw. die Formfeder mit einer Öffnung, durch die das Kabel verläuft, durch die Stoppvorrichtung, die größer als die Öffnung ist, in Richtung Winde bewegt. Dabei wird ein Kabelanfangs-Schalter ausgelöst. Die Windensteuerung registriert dieses Signal und stoppt den Kabelaufwicklungsvorgang, bspw. durch Unterbrechung der Stromversorgung des Windenmotors. Der Magnetring kann als Stoppvorrichtung in Verbindung mit Magnetsensoren wie bspw. Reed-Sensoren dienen, welche im windenabseitigen Führungselement integriert/positioniert sind und damit in dieser Anordnung einen Magnetschalter bilden. Passiert der Magnetring die Position der Magnetsensoren (in einem Aspekt durch eine senkrechte Bewegung durch eine Ebene, die durch zwei Magnetsensoren aufgespannt wird), wird ein Signal ausgelöst, dass durch die Windensteuerung erkannt und u.a. derart prozessiert wird, dass der Windenmotor stoppt und damit auch der Kabelvortrieb. Zugleich kann auch eine Messvorrichtung, die die Kabellänge ermittelt, die ermittelte Kabellänge beim Schalten dieses Magnetschalters.

Zwischen dem (im Falle mehrerer, dem letzten) Räderpaar und dem Kabelaufnahmekorb wird das Kabel durch ein Ringleger-Führungselement geführt. Führungselement, Räderpaar(e) und Ringleger-Führungselement sind dabei vorzugsweise auf einer Achse gelagert, wobei in einem Aspekt auf der Achse jedoch eine oder mehr Umlenkengen stattfinden können. Die Vorrichtung ist jedoch robuster und günstiger, wenn sie ohne solche Umlenkungen auskommt.

Das Ringleger-Führungselement nimmt das vom Räderpaar kommende Kabel auf und lenkt es schräg über einen am Ringleger-Führungselement befestigten Ringleger um. Dabei ist das Ringleger-Führungselement beweglich gelagert und dreht sich aufgrund der Reibung des . Kabels beim Wickelvorgang. Der Ringleger ragt dabei in Richtung Kabelaufnahmekorb. Das Ende des Ringlegers steht dabei schräg zur beschriebenen Achse des Kabels. In einem Ausführungsbeispiel wird die Rotation des Ringleger-Führungselements abgegriffen und durch einen Encoder ausgewertet. Dazu kann bspw. die Rotation des Ringleger-Führungselements über eine Ringleger-Führungselement-Encoder-Welle zum Encoder übertragen werden.

Das Kabel ist am von der Drohne aus gesehen anderen Ende elektrisch, bspw. über eine Kabel-Steckverbindung, mit dem Serviceroboter verbunden, um darüber die Drohne mit Strom zu versorgen und ggf. Signale auszutauschen. Dabei ist das Kabel am Ende mit einem Zugschalter ausgestattet, um die komplette Abwicklung des Kabels zu stoppen. Beim Auslösen dieses Schalters wird demnach der Kabelvortrieb gestoppt. Das Kabel kann bspw. an einer Kabelendfeder fixiert sein, die bei Zug durch das Kabel einen Kabelende-Schalter auslöst. Zugleich nimmt die Kabelendfeder flexibel die Kräfte auf, die durch Zugbewegungen am Kabel entstehen. Der Kabelende-Schalter generiert dabei ein Signal, dass die Windensteuerung veranlasst, die Kabelabwicklungsbewegung zu unterbrechen. In einem Aspekt wird dadurch der Windenmotor gestoppt.

Mindestens ein vom Kabelanfangs-Schalter 232 oder Kabelende-Schalter 230 generierter Signal kann bspw. in der Windensteuerung dafür genutzt werden, die ermittelte Kabellänge zu kalibrieren, indem der mittels Encoder errechnete Wert der Kabellänge, die auf- oder abgewickelt wird, auf null gesetzt/resetted wird. Darüber wird Schlupf, der sich im Zeitablauf aufsummieren kann, reduziert.

Der Kabelaufnahmekorb ist so gestaltet, dass er über Kabelaufnahmekorb-Lüftungsschlitze oder anderweitige Öffnungen verfügt, die ein Umströmen des darin aufgewickelten Kabels mit Luft erlauben und damit eine Kühlung des Kabels ermöglichen. Dazu wird mindestens ein Windenlüfter eingesetzt, der sich in einem Aspekt mittig im Kabelaufnahmekorb befindet und eine radiale Lüftung des Kabels erlaubt. Dabei kann die Luft das Kabel durch einen radialen Luftstrom erreichen und/oder durch einen von unten kommenden und nach oben führenden Luftstrom. In einem Aspekt weist der Kabelaufnahmekorb einen runde Trogform auf, wobei die Form durch Zinken dargestellt wird, zwischen denen die Luft durchströmen kann. In einem alternativen oder ergänzenden Aspekt erfolgt die Lüftung des Kabels im Kabelaufnahmekorb durch radial angeordnete Lüfter.

In einem Aspekt kann die Belüftung des Kabels derart geregelt sein, dass sie in Anhängigkeit von der Temperatur des Kabels erfolgt, die bspw. mittels eines Temperatursensors ermittelt wird, der sich im Luftstrom befindet und die am Kabel vorbeigeleitete Luft auswertet. Darüber wird die Lüftungsintensität entsprechend eingestellt, so dass bei einer höheren Temperatur der Luftdurchsatz des Lüfters erhöht wird und umgekehrt. In einem alternativen oder ergänzenden Aspekt erfolgt die Intensitätsregelung der Belüftung über die ermittelte Kabellänge, die sich innerhalb des Kabelaufnahmekorbs befindet, wobei die Lüftungsintensität mit zunehmender Kabellänge innerhalb des Kabelaufnahmekorbs zunimmt. Dies trägt dem Umstand Rechnung, dass durch das in den Kabelaufnahmekorb gelegte Kabel eine Spule darstellt, deren Verlustleistung mit der Zahl an Windungen zunimmt.

Die Erfindung umfasst einen autonomen, mobilen Serviceroboter, der über ein Kabel mit einer Drohne verbunden ist, wobei das Kabel über eine Winde zeitweise auf- und abgewickelt werden kann und die Winde über eine Kabelaufnahmevorrichtung und eine Kabeltransportvorrichtung verfügt sowie über mindestens einen Schalter, der bei Auf- und/oder Abwicklung des Kabels ausgelöst wird, wobei das Kabel durch mindestens ein Ringleger-Führungselement hindurchführt, und wobei das Ringleger-Führungselement drehbar gelagert ist und über einen schräg abstehenden Ringleger verfügt. Das Kabel kann dabei, in einem Aspekt, über eine Stoppvorrichtung verfügen, die bei Aufwicklung, bspw. über ein gefedertes Element, einen Kabelanfangs-Schalter auslöst. Das gefederte Element kann bspw. ein windenabseitiges Kabelführungselement sein. Bspw. kann das Kabel bei Abwicklung über ein gefedertes Element einen Kabelende-Schalter auslösen. Bei der Kabelaufnahmevorrichtung kann es sich um einen nach oben offenen Kabelaufnahmekorb handeln, der bspw. Lüftungsöffnungen aufweist und, optional, von Luft durchströmt wird, die durch mindestens einen Windenlüfter für eine Kühlung des aufgewickelten Kabels sorgt.

Beim Wicklungsvorgang bewegt sich das Kabel durch mindestens ein Räderpaar hindurch, wobei das Räderpaar aus mindestens einem Kabel-Antriebsrad und mindestens einem Anpressrad besteht. Das Kabel kann optional durch mindestens ein Ringleger-Führungselement hindurchgeführt werden. Dieses Ringleger-Führungselement kann z.B. drehbar gelagert sein und optional mit einem Ringleger in Eingriff stehen, der bspw. schräg absteht. Das Kabel wird, in einer Ausführungsform, zwischen dem windenabseitigen Führungselement, dem mindestens einen Räderpaar und dem Ringleger-Führungselement auf einer im Wesentlichen waagerechten Linie bewegt. Mindestens ein mit dem Kabel in Eingriff stehendes Rad verfügt über einen Encoder, der bspw. von einer Windensteuerung ausgewertet wird. Optional kann die Anordnung auch über einen zweiten Encoder verfügen wie an anderer Stelle bereits exemplarisch beschrieben. Diese Windensteuerung kann, in einem Aspekt, eine Ermittlung der ab- und/oder aufgewickelten Kabellänge vornehmen. Dabei kann die Windensteuerung bspw. über Regeln zur Kalibrierung der ab- und/oder aufgewickelten Kabellänge mittels mindestens eines Schalters verfügen.

### Zeichnungen

Die Erfindung wird nun anhand der der Zeichnungen näher erläutert. Es zeigen:
Fig. 1: Systemsicht Robotiksystem
Fig. 2: Systemarchitektur Robotiksystem
Fig. 3 A-D: Erste Ausführungsform der Winde
Fig. 4 A-F: Zweite Ausführungsform der Winde
Fig. 5: Verfahren zur Windensteuerung
Fig. 6: Verfahren zur Kühlung eines Kabels auf einer Winde
Fig. 7: Verfahren zur Kabellängenermittlung
Fig. 8A-F: Dritte Ausführungsform der Winde
Fig. 9A-F: Vierte Ausführungsform der Winde
Fig. 10: Kabellängen-Ermittlung mit Korrekturverfahren

### Detaillierte Beschreibung der Erfindung

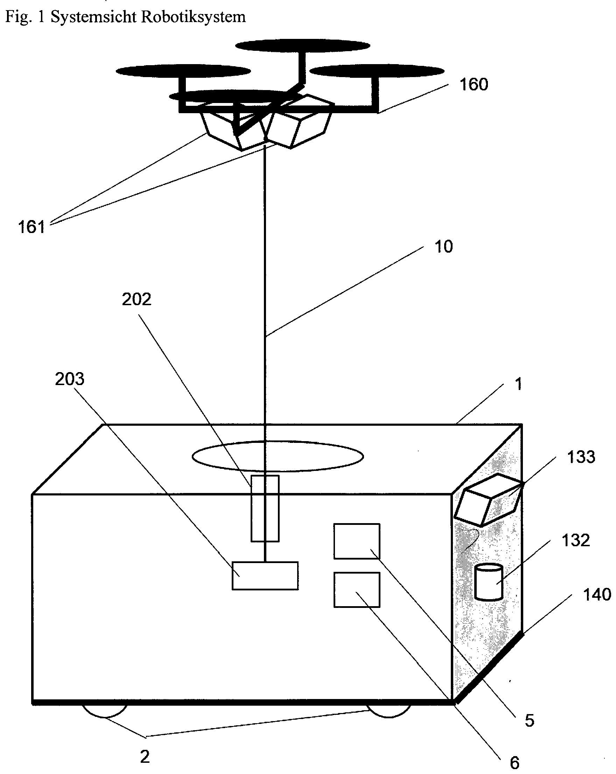

In Fig. 1 stellte eine Systemsicht des Robotiksystems dar mit dem Serviceroboter 1. Die Darstellung und Positionierung der dargestellten Elemente ist hierbei exemplarisch und kann abweichend sein. Der Serviceroboter verfügt über Roboterräder 2, eine Front-Kamera 133 und einen LIDAR 132 zur Hinderniserkennung, eine druckempfindliche Stoßstange 140 als Puffer und zugleich zur Hindernisdetektion (mit integrierter Schaltleiste). Alternativ könnten hier auch Ultraschall-, Radar- oder Infrarot-Time-of-Flight-Sensoren zum Einsatz kommen. Ferner ist der Serviceroboter 1 über ein Kabel 10 mit der Drohne 160 verbunden, die wiederum mindestens eine Kamera 161 aufweist. Bei der Kamera 133 kann es sich um eine RGB-Kamera, eine Schwarz-Weiß-Kamera, eine Tiefenkamera (Time-of-Flight, Speckle oder Stereo) handeln oder alternativ bspw. um einen 3D-LIDAR. In einem Aspekt handelt es sich dabei um eine Orbbec Astra. Der Serviceroboter 1 kann, in einem Aspekt. rotationssymmetrisch sein, bspw. durch Anordnung von zwei Roboter-Antriebsrädern 3 auf einer mittelzentrierten Achse des Serviceroboters 1. Der Serviceroboter 1 wird über einen Akkumulator 142 mit Strom versorgt.

Fig. 2 stellt eine Systemarchitektur des Robotiksystems dar. Es gibt zwei Ebenen, die Hardwareebene 180 und die Softwareebene 100. Auf der Softwareebene 100 befindet sich ein Navigationsmodul 110, umfassend ein 2D/3D-Umfelderfassungsmodul für die 2D und/oder 3D-Umfelderfassung 111, ein Pfadplanungsmodul 112, mittels dessen der Serviceroboter 1 effizient den eigenen, zurückzulegenden Weg berechnen und hinsichtlich bestimmter Kriterien in seinem Aufwand bewerten kann. Das Navigationsmodul 110 ist u.a. dafür bestimmt, die Position des Serviceroboters 1 zu ermitteln. Das kann bspw. mittels der Odometrieeinheit 131 oder durch Erkennung charakteristischer Merkmale aus einer Umfelderkennung (auf Basis des LIDARs 132 oder einer Kamera 133) und einem Abgleich mit im Kartenmodul 113 hinterlegten Karten, die diese Merkmale ebenfalls beinhalten, bspw. unter Berücksichtigung der durch die Kamera 133 und/oder den LIDAR 132 ermittelten Entfernungen zu diesen Merkmalen erfolgen. Das kann bspw. im Selbstlokalisierungsmodul 114 implementiert sein. Ferner umfasst das Navigationsmodul 110 einen Bewegungsplaner 115, der u.a. die Ergebnisse der Pfadplanung aus dem Pfadplanungsmodul 112 nutzt und eine optimale Wegstrecke für den Serviceroboter 10 unter Berücksichtigung bzw. Optimierung verschiedener Kostenfunktionen errechnet. Als Kostenfunktionen fungieren neben den Daten aus der Pfadplanung auch solche aus der Hindernisvermeidung, einer Vorzugsfahrrichtung, usw. Hierbei kommt der im Stand der Technik bekannte Dynamic Window Approach zum Einsatz. Weiterhin verfügt der Serviceroboter 1 über ein Kartierungsmodul 117 zur Kartierung seines Umfelds, sowie ein Lademodul 118 für das automatische Aufladen bei niedrigem Energieniveau im Akkumulator 142. Letzteres bedeutet, dass der Serviceroboter 1, bspw. wenn die Spannung des Akkumulators 142 unter einen definierten Schwellwert fällt, automatisch eine Ladestation aufsucht. Der Serviceroboter 1 verfügt ferner über ein Kartenmodul 113, in welchem Karten seines Umfelds abgelegt sind, bspw. nach Erstellung durch das Kartierungsmodul 117. Darüber hinaus befindet sich auf der Softwareebene ein Drohnenmodul 120 mit einem Winden-Ansteuerungsmodul 121 und einem optionalen Drohnenbildverarbeitungsmodul 122.

Auf der Hardwareebene findet sich eine Odometrieeinheit 131, mittels der die vom Serviceroboter 1 zurückgelegte Wegstrecke über das Messen der von den Roboter-Antriebsrädern 3 zurückgelegten Distanz ermittelt wird. Dazu sind entweder an einem Roboterantriebsmotor (und hier bspw. der Achse) und/oder an den Roboter-Antriebsrädern 3 bzw. einem eventuell vorhandenen Getriebe Sensoren zur Ermittlung des Drehwinkels vorhanden. Die Odometrieeinheit 131 ist ferner so konfiguriert, dass über die Winkelermittlung in Zusammenhang mit dem Durchmesser der Roboter-Antriebsräder 3 und etwaiger, zwischengeschalteten Getriebeübersetzungen die zurückgelegte Wegstrecke ermittelt werden kann. Hierbei kann es sich bspw. um Hall-Sensoren, Encoder, Stroboskop-Drehzahlmesser, Tachogenerator, Induktionsgeber und/oder einen Wiegand-Sensor, etc. handeln. In einem Beispiel können die Encoder (per Lichtschranke) mehr als 1024 Schritte je Umdrehung auslesen, die Hall-Sensoren 24 Schritte.

Druckempfindliche Stoßstangen 140 sind hardwarenahe Mechanismen zur Kollisionsdetektion. Das gilt bspw. auch für den LIDAR 132, der jedoch auch zur Navigation eingesetzt wird, wofür alternativ und/oder ergänzend auch die Kamera 133 genutzt werden kann. Der Serviceroboter 1 verfügt über eine Kommunikationsschnittstelle 135 (der Kürze nach in Fig. 2 als WLAN bezeichnet) ausgestattet ist. Dabei kann es sich um WLAN, Bluetooth, ZigBee etc. handeln, wobei die Kommunikation drahtlos erfolgt. Die Kommunikationsschnittstelle kann z.B. zum Informationsaustausch und/oder Informationsübermittlung von und/oder zu einem externen System oder der Drohne 160 genutzt werden, zum Informationsaustausch und/oder Informationsübermittlung von und/oder zu mindestens einem weiteren Serviceroboter 1. Die Art der übertragenen und/oder ausgetauschten Informationen ist nicht begrenzt. Es kann sich um Navigationsinformationen, applikationsspezifische Informationen handeln, etc. Ein Differentialantrieb 137 sorgt für die Bewegung der Roboter-Antriebsräder 3. Eine Ladesteuerung 139 ist für das Aufladen des Akkumulators 142 konfiguriert. Die Sicherheitssteuerung 136 bringt bspw. die Sensorelemente mit dem Differentialantrieb 137 zusammen und sorgt dafür, dass im Falle einer Hindernisdetektion eine Anpassung der Geschwindigkeit und der geplanten Fahrtrajektorie vorgenommen wird. Der Serviceroboter 1 verfügt darüber hinaus über Bedienelemente 138 wie Schalter und ggf. ein Display.

Weiterhin verfügt der Serviceroboter über eine Winde 200 und eine Windensteuerung 201.

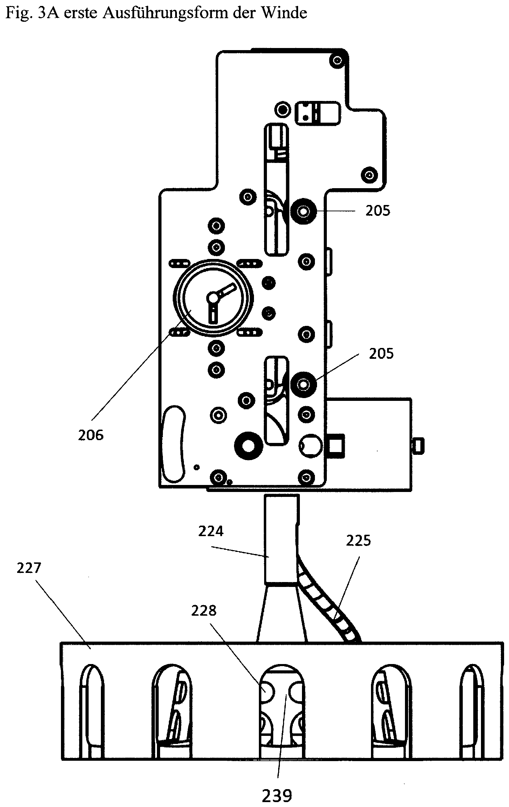

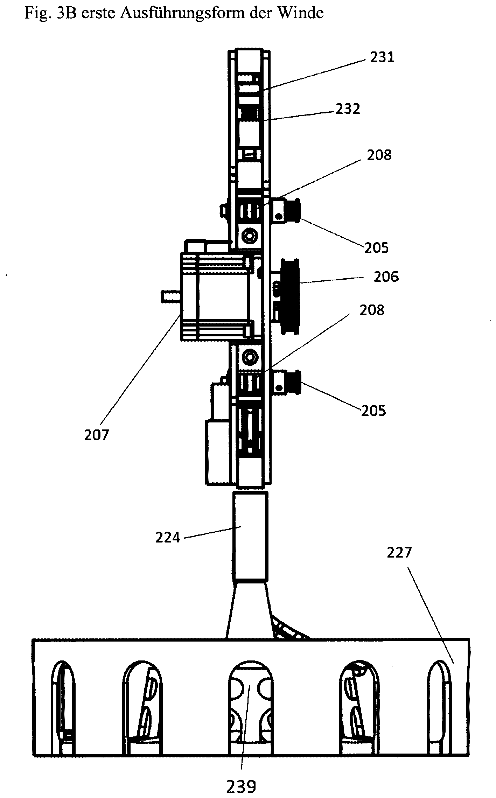

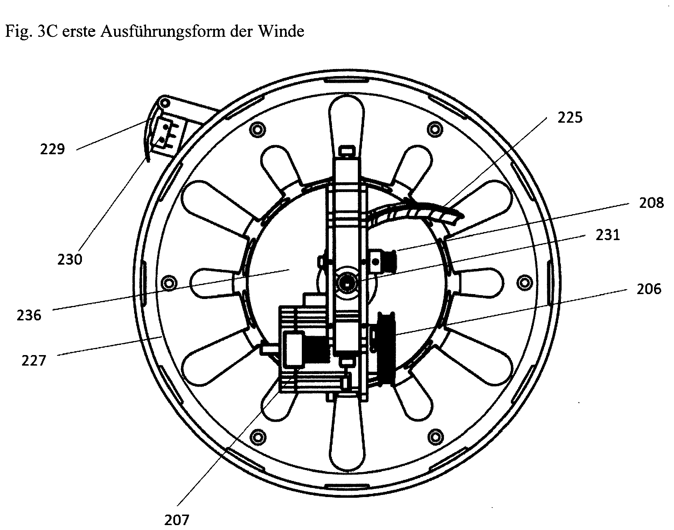

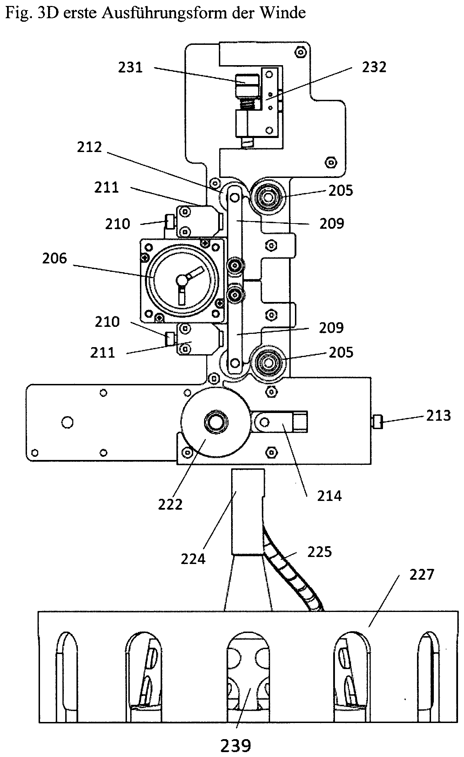

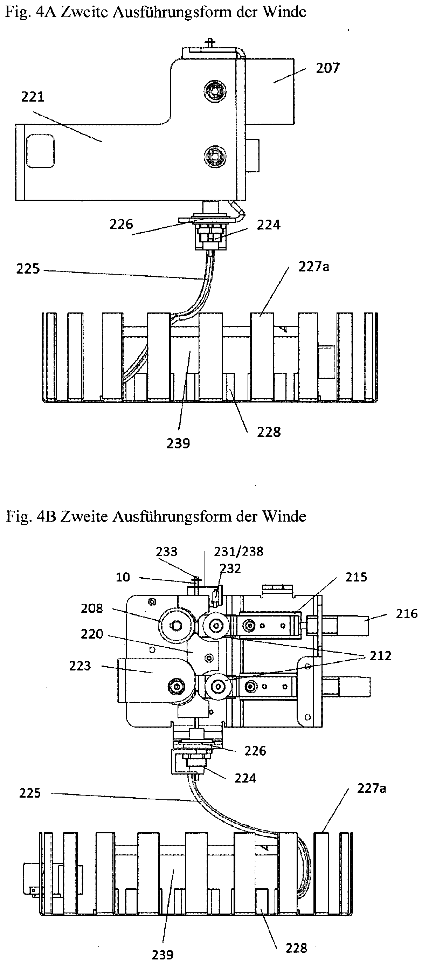

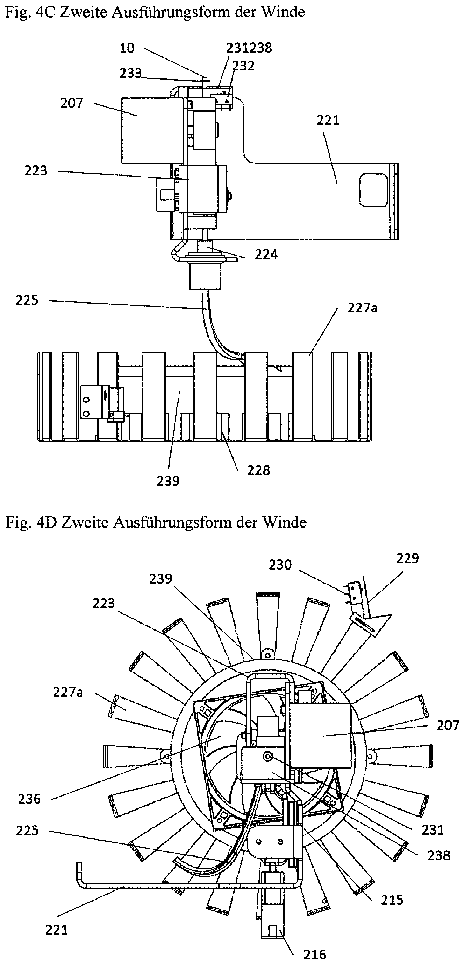

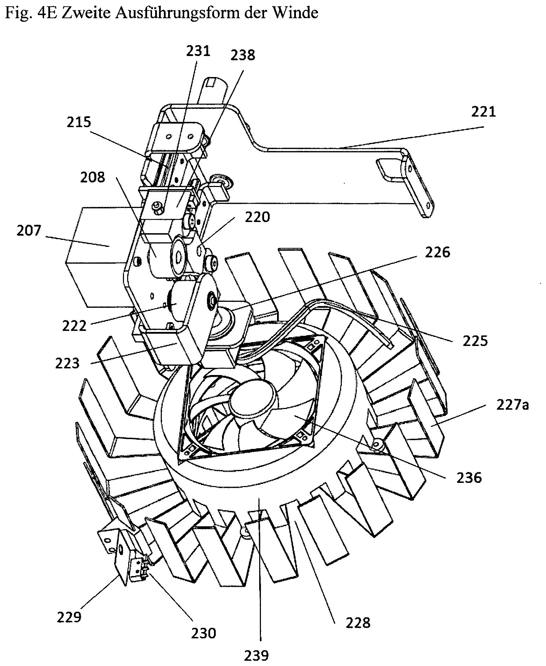

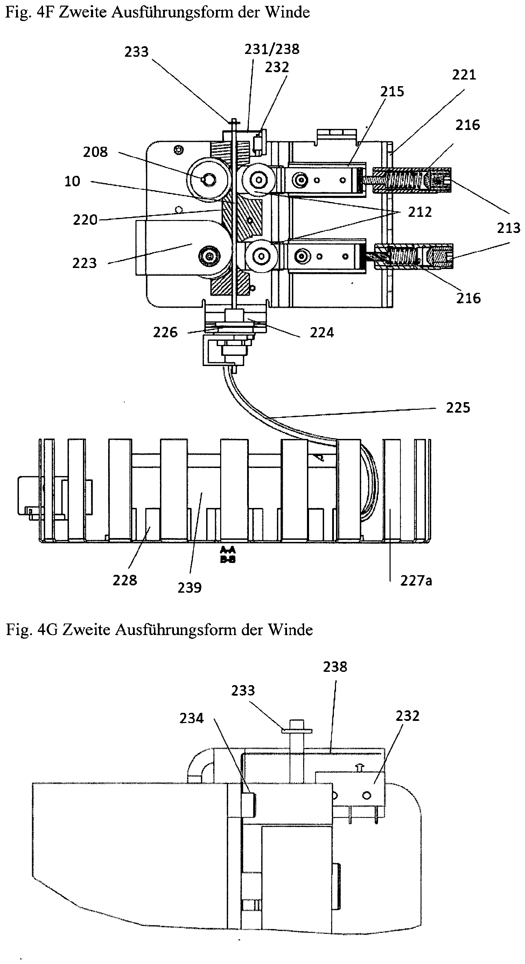

Die Winde 200 umfasst eine Kabeltransportvorrichtung 202 und eine Kabelaufnahmevorrichtung 203. Die Kabeltransportvorrichtung 202 umfasst u.a. mindestens einen Windenmotor 207 und mindestens ein Räderpaar, bestehend aus Kabel-Antriebsrad 208 und einem Anpressrad 212, zwischen denen das Kabel 10 hindurchbewegt wird, wobei der Transport durch die Umdrehungen des Kabel-Antriebsrads 208 erfolgt. In einem Aspekt ist dabei mindestens ein Räderpaar vorhanden, bei dem ein Rad einen Winden-Encoder 222 bewegt, der es erlaubt, durch die erfolgten Umdrehungen die Förderung des Kabels 10 zu messen. Details zu zwei einander ähnlichen Ausführungen sind in den Folgeabsätzen wie auch in Fig. 3 und 4 beschrieben.

Eine erste Ausführungsform der Winde 200 ist in Fig. 3 A-D illustriert. Fig. 3A stellt eine Seitenansicht auf die Winde 200 dar. Das Kabel 10 (nicht dargestellt) verläuft dabei von oben nach unten, wobei der obere Teil die Kabeltransportvorrichtung 202 darstellt und der untere Teil die Kabelaufnahmevorrichtung 203. Letztere umfasst den Kabelaufnahmekorb 227, der rund ist und nach oben offen. Seitlich umfasst der Korb Öffnungen, die Kabelaufnahmekorb-Lüftungsschlitze 228 bezeichnet werden. Diese können rechteckig, rund oder eine andere Form aufweisen. Denkbar wären bspw. auch eckige Ausführungsformen des Kabelaufnahmekorbs 227. Der Kabelaufnahmekorb 227 ist in der gezeigten Darstellung quasi ringförmig ausgebildet und stellt einen nach oben geöffneten Trog dar. Im Bereich der hinter dem Ende der Bezugslinie zur Bezugsbezeichnungsnummer 228 liegt, befindet sich der Windenlüfter 236, der Luft durch die Kabelaufnahmekorb-Lüftungsschlitze 228 bläst, um das Kabel 10 im Kabelaufnahmekorb 227 zu kühlen. Wenn im Kabel 10 Strom anliegt und es gewickelt im Kabelaufnahmekorb 227 liegt, das gewickelte Kabel 10 also eine Spule darstellt, die Wärme erzeugt, wird die Wärme durch diese Luftkühlung abgeführt.

Das Kabel 10 selbst wird durch einen röhrenförmigen Ringleger 225 in den Kabelaufnahmekorb 227 gelegt. Der Ringleger 225 ist wiederum schräg am Ringleger-Führungselement 224 befestigt, das beweglich gelagert ist. Durch die Reibung des Kabels 10 drehen sich das Ringleger-Führungselement 224 und der Ringleger 225. In der gezeigten Ausführungsform erfolgt der Antrieb des Kabels 10 über Kabel-Antriebsräder 208, die so direkt nicht in Fig. 3A erkennbar sind, weil sich eine Abdeckplatte auf der Kabeltransportvorrichtung 202 befindet. Erkennbar sind die Kabelantrieb-Riemenscheibe 205, die sich auf einer Achse mit den Kabel-Antriebsrädern 208 fest verbunden befinden. Die Kraftübertragung zwischen dem Windenmotor 7 und den in diesem Fall zwei Kabel-Antriebsrädern 208 erfolgt über einen Zahnriemen (nicht dargestellt), der mit den Kabelantrieb-Riemenscheibe 205 in Eingriff steht und wiederum mit der Motor-Riemenscheibe 206, auf der Welle des Windenmotors 207 sitzt.

Fig. 3B zeigt eine um 90° gedrehte Sicht auf die Anordnung aus Fig. 3A. Erkennbar hier nun der Motor 27 sowie die Kabel-Antriebsräder 208. Im oberen Teil der Kabeltransportvorrichtung 202 befindet sich ein windenabseitiges Führungselement 231, durch dass das Kabel 10 nach oben austritt. Diese ist in einem Aspekt röhrenförmig und federnd gelagert. Wird von oben Druck auf das windenabseitige Führungselement 231 ausgeübt, federt es nach unten. Dabei löst es einen Kabelanfangs-Schalter 232 aus, bei dem es sich in einem Aspekt um einen Endlagenschalter handelt. Die Kraftausübung auf das windenabseitige Führungselement 231 kann durch eine Stoppvorrichtung 233 erfolgen, die auf dem Kabel 10 angebracht ist, z.B. eine Klemme oder einen Knoten, der bzw. die einen Durchmesser aufweist, der größer ist als die Öffnung bzw. die Röhre des windenabseitigen Führungselements 231, wodurch dieses sich nach unten bewegt, wenn das Kabel 10 durch das Kabel-Antriebsrad 208 nach unten bewegt wird. Das durch den Schaltvorgang entstehende Signal löst in der Windensteuerung 201 einen Stopp des Windenmotors 10 aus. Die im windenabseitigen Führungselement 231 eingesetzte Federung dient gleichzeitig dazu, die durch die Stoppvorrichtung auf die Winde 200 wirkenden Kräfte aufzunehmen.

Fig. 3C stellt eine Draufsicht auf die Winde 200 dar. Der Kabelaufnahmekorb 227 ist hier als Ring zu erkennen, in dessen Mitte sich der Lüfterbauraum 237 befindet, um einen Windenlüfter 236 zu platzieren. Zu erkennen sind der Windenmotor 207, der Ringleger 225 sowie die Kabelantrieb-Riemenscheibe 205 und die Motor-Riemenscheibe 206. Nahezu im Zentrum der Abbildung befindet sich das windenabseitige Führungselement 231 mit dem ringförmigen Auslass für das Kabel 10. Am Rand des Kabelaufnahmekorbs 227 befindet sich eine Kabelendfeder 229, an der das Kabel 10 befestigt ist. Dabei handelt es sich bspw. um ein Federblech und/oder eine Formfeder. In einem Aspekt führt das Kabel 10 durch ein Loch innerhalb des Kabelendfeder 229, wobei das Kabel 10 auf der dem Kabelaufnahmekorb 227 abgewandten Seite eine Stoppvorrichtung 233 aufweist, bspw. einen Knoten oder eine Klemme, der bzw. die einen größeren Durchmesser aufweisen als das Loch innerhalb der Kabelendfeder 229. In einen Aspekt kann das Kabel 10 auch anderweitig an der Kabelendfeder 229 befestigt sein, bspw. durch eine Klemmvorrichtung. Wird auf das Kabel 10 im Rahmen des Abwickelvorgangs der Winde 200 Zug ausgeübt, bewegt sich die Kabelendfeder 229 aufgrund der beschriebenen Fixierung des Kabels 10 / der Stoppvorrichtung 233 etc. und löst dabei einen Kabelende-Schalter 230 aus, bei dem es sich in einem Aspekt um einen Endlagenschalter handelt. Die Windensteuerung 201 registriert dies als Signal und stoppt den Abwicklungsvorgang der Winde 200.

Fig. 3D stellt die gleiche Perspektive auf die Winde 200 dar wie Fig. 3A, jedoch ist die Verdeckung des Inneren der Kabeltransportvorrichtung 202 ausgeblendet. Dabei ist bspw. der radförmige Winden-Encoder 222 zu sehen, an dem das Kabel 10 entlangläuft und gegen den es durch ein Anpressrad 212 gedrückt wird. Damit stellen Winden-Encoder 222 und Anpressrad 212 ein Radpaar dar. Das Anpressrad 212 ist auf einer Anpressrad-Halterung 214 gelagert, die über eine Anpressrad-Stellschraube 213 in der Tiefe variiert werden kann, wodurch bspw. der Kabeldurchmesser einstellbar ist. Die Anpressrad-Stellschraube 213 wiederum regelt das Spiel, das ein Anpressrad-Stellglied 216 hat, das jedoch nicht komplett sichtbar ist. Je tiefer die Anpressrad-Stellschraube 213 in das Anpressrad-Stellglied 216 geschraubt wird (siehe auch Fig. 4F), desto stärker wird die Feder gepresst, die wiederum den Druck auf die Anpressrad-Halterung 214 weitergibt und damit den Druck auf das Anpressrad 212. Fig. 3D illustriert auch, wie der Kabelantrieb erfolgt. Hinter der Kabelantrieb-Riemenschreibe 205 sitzt das Kabel-Antriebsrad 208, an dem das Kabel 10 entlangläuft. Dieses wiederum steht mit dem im Radpaar korrespondierenden Anpressrad 212 in Eingriff, welches an einem Anpresshebel 209 befestigt ist. Dieser ist so gelagert, dass der Druck auf das Kabel 10 über ein Anpresshebel-Stellglied 211 mittels des Anpresshebels 209 erfolgt. Das Anpresshebel-Stellglied 211 ist im Inneren bspw. aufgebaut wie das Anpressrad-Stellglied 216 in Fig. 4F, wobei eine Anpresshebel-Stellschraube 210 entsprechend einstellbaren Druck auf die im Anpresshebel-Stellglied 211 enthaltene Feder ausübt. Zu erkennen hier auf das windenabseitige Führungselement 231 und der Kabelanfangs-Schalter 232, als Endlagenschalter ausgeführt.

Fig. 4A-G beschreiben eine alternative Ausführungsform der Winde 200, die noch einfacher im Aufbau und damit noch günstiger zu fertigen ist. Anstelle der zwei Radpaare für den Antrieb des Kabels 10 kommt lediglich ein Radpaar zum Einsatz, womit auch auf einen Riemenantrieb verzichtet werden kann und das Kabel-Antriebsrad 208 direkt auf der Welle des Windenmotors 207 sitzt. Es wären, in alternativen Ausführungsformen, auch Übersetzungen zwischen Windenmotor 207 und Kabel-Antriebsrad 208 denkbar. Insgesamt ähneln sich beide Windendesigns.

Fig. 4A stellt eine Seitenansicht dar. Der Windenmotor 207 ist hierbei in einer Verkleidung positioniert. Die Kabeltransportvorrichtung 202 besitzt eine Winden-Halterung 221, mit der sie bspw. am Gehäuse des Serviceroboters 1 fixiert werden kann. Am unteren Ende der Kabel-Transportvorrichtung 202 sitzt beweglich in einem Ringleger-Führungselement-Lager 226 positioniert das drehbare Ringleger-Führungselement 224, welches bei Förderung des Kabels 10 rotiert. Die Lagerung kann als Gleitlager, Kugellager oder anderweitiges Lager ausgestaltet sein. Ein Ringleger 225 zweigt schräg vom Ringleger-Führungselement 224 ab. Der Kabelaufnahmekorb 227 wird durch die Kabelaufnahmekorb-Zinken 227a, die Kabelaufnahmekorb-Lüftungsschlitze 228 und den Kabelaufnahmekorb-Innenring 239 sind, ähnlich auch schon in Fig. 3A-D. Kabelaufnahmekorb-Lüftungsschlitze 228 sind sowohl in der äußeren als auch inneren Kabelaufnahmekorb-Wand enthalten.

Fig. 4B zeigt eine um 90° (im Uhrzeigersinn) gedrehte Perspektive auf die Winde 200. Erkennbar ist in der Darstellung auch ein Teil des Innenlebens der Kabeltransportvorrichtung 202. Dazu zählt das Kabel-Antriebsrad 208, das mit dem Kabel 10 in Eingriff steht und dem gegenüber, in einem Radpaar, sich das Anpressrad 212 befindet. Dieses übt mittels eines Anpress-Stellglieds 216, geführt durch eine Anpressrad-Linearführung 215, Druck auf das Kabel 10 aus. Eine in diesem Fall identische Anpressrad-Anordnung mit Anpressrad 212, Anpressrad-Linearführung 215 und Anpressrad-Stellglied 216 findet sich auch für das zweite Radpaar, wobei als Antagonist für das Anpressrad 212 ein Encoderrad fungiert, wobei der Winden-Encoder 222 durch die Winden-Encoder-Halterung 223 verdeckt ist. Das Kabel 10 verläuft von oben nach unten durch die Kabeltransportvorrichtung 202 und zwischen den beiden Räderpaaren durch ein optionales Kabel-Führungselement 220. Unterhalb des Encoder-Anpressrad-Radpaares befindet sich das Ringleger-Führungselement 224. Oberhalb des Antriebsrad-Anpressrad-Radpaares sitzt das windenabseitige Führungselement 231. Dieses verfügt über eine Öffnung, bspw. eine runde Bohrung, durch die das Kabel 10 verläuft. Dabei ist das windenabseitige Führungselement federnd gestaltet bspw. als Federblech bzw. Formfeder. Trifft beim Einzug des Kabels 10 die Stoppvorrichtung 233 des Kabels, eine Klemme, ein Knoten im Kabel etc. auf das windenabseitige Führungselement 231, so wird es in Kabelzugrichtung verbogen. Dabei löst das windenabseitige Führungselement 231 einen Kabelanfangs-Schalter 232 aus, der in einem Aspekt ein Endlagenschalter ist. Das dabei generiere Signal wird durch die Windensteuerung 201 als Ende des Kabelaufwicklungsvorgangs erkannt und die Kabelförderung gestoppt, d.h. bspw. der Windenmotor 207 stromlos gestellt.

Fig. 4C stellt eine im Vergleich zu Fig. 4B um 180° gedrehte Sicht auf die Winde 200 dar. Erkennbar sind die Winden-Halterung 221, der Kabelaufnahmekorb-Zinken 227a, Kabelaufnahmekorb-Lüftungsschlitze 228, Ringleger 225 und das damit verbundene Ringleger-Führungselement 224 am unteren Bereich der Kabeltransportvorrichtung 202. Verdeckt ist der Winden-Encoder 222 hinter der Winden-Encoder-Halterung 223. Zu sehen ist auch das Gehäuse des Windenmotors 207. Im oberen Bereich befindet sich das windenabseitige Führungselement 231, hier als Federblech bzw. Formfeder ausgestaltet mit dem darunter gelagerten Kabelanfangs-Schalter 232, als Endlagenschalter gestaltet, der ausgelöst wird, wenn durch die Stoppvorrichtung 233 das windenabseitige Führungselement 231 nach unten gebogen wird.

Fig. 4D stellt eine Draufsicht auf die Winde 200 dar. Dabei wird die Kabeltransportvorrichtung 202 durch die Winden-Halterung 221 oberhalb der Kabelaufnahmevorrichtung 203 gehalten. Zu erkennen ist der seitlich sitzende Windenmotor 207, die Winden-Encoder-Halterung 223, Anpressrad-Stellglied 216, die Anpressrad-Linearführung 215. Aus der Draufsicht wird deutlich, dass die Umrandung des Kabelaufnahmekorbs 227 zinkenförmig gestaltet ist, d.h. aus Kabelaufnahmekorb-Zinken 227a und Kabelaufnahmekorb-Lüftungsschlitze 228 verfügt, um eine ausreichende Belüftung des Kabels 10 zu gewährleisten. Die Belüftung erfolgt durch den zentral im Kabelaufnahmekorb 227 sitzenden Windenlüfter 236, der bspw. einen radialen Luftstrom erzeugt und innerhalb eines Windenlüfter-Bauraums 237 positioniert ist. Erkennbar von oben ist auch das windenabseitige Führungselement 231 mit einer runden Bohrung für das Kabel 10. Weiterhin befindet sich am Rand des Kabelaufnahmekorbs 227 eine Kabelendfeder 229, an der das Kabel 10 fixiert ist (bspw. durch eine Klemmvorrichtung) oder durch die das Kabel 10 verläuft (durch eine Bohrung). In dem Fall ist das Kabel 10 mit einer Stoppvorrichtung 233 versehen, die sich auf der dem Kabelaufnahmekorb 227 abseitigen Seite der Kabelendfeder 229 befindet und die größer ist als die Bohrung durch die Kabelendfeder 229, so dass bei Zug des Kabels im Rahmen der Kabelabwicklung die Stoppvorrichtung 233 eine Bewegung der Kabelendfeder 229 initiiert, die den Kabelende-Schalter 230 auslöst, der in einem Aspekt als Endlagenschalter ausgestaltet ist. Die Anordnung der Kabelendfeder 229, einer etwaigen Stoppvorrichtung 233 und Kabelende-Schalter 230 kann analog zur ersten Ausführungsform der Winde (siehe Fig. 3A-D) gestaltet sein.

Fig. 4E zeigt die Winde 200 aus einer schrägen Perspektive. Neben den bereits erläuterten Elementen sind die Anpressrad-Linearführungen 215, das Kabel-Antriebsrad 208 und das Kabel-Führungselement 220 zu erkennen. Besonders gut zu erkennen sind die Kabelaufnahmekorb-Zinken 227a, in den das Kabel 10 durch die Drehbewegung des Ringlegers 225 eingelegt (bzw. entnommen) wird. Dabei strömt ein vom Windenlüfter 236 nach unten gerichteter Luftstrom durch an inneren Ring des Kabelaufnahmekorbs 227 durch die Kabelaufnahmekorb-Lüftungsschlitze 228 in den graben- bzw. ringförmigen Bereich des Kabelaufnahmekorbs 227 und kühlt das sich dort befindliche, aufgewickelte Kabel 10.

Fig. 4F zeigt den Verlauf des Kabels 10 durch die Kabeltransportvorrichtung 202. Zu erkennen ist hier auch das Innenleben der Anpress-Stellglieder 216, bei denen eine Anpress-Stellschraube 213 die Höhe einer Druckfeder variiert und damit den Druck einstellt, der über die Anpressrad-Linearführung auf das Anpressrad 212 und damit das Kabel 10 wirkt. In einem Aspekt ist das Anpressrad-Stellglied 216 außen mit einem Gewinde versehen und in der Winden-Halterung 221 verschraubt, womit sich ergänzend/alternativ zur Anpress-Stellschraube 213 der Druck auf das Kabel 10 wirkt.

In Fig. 4G ist das Zusammenspiel von Stoppelement 233 am Kabel 10, des windenabseitigen Führungselements 231 und des Kabelanfangs-Schalters 232 näher dargestellt. Hierbei ist das windenabseitige Führungselement 231 als Federblech bzw. Formfeder ausgestaltet, die über eine Feder-Fixierung 234 befestigt ist. Bei Zug des Kabels 10 durch Aufwickeln verbiegt sich das windenabseitige Führungselement 231, das als Formfeder bzw. Federblech ausgestaltet ist, und löst den Kabelanfangs-Schalter 232 aus.

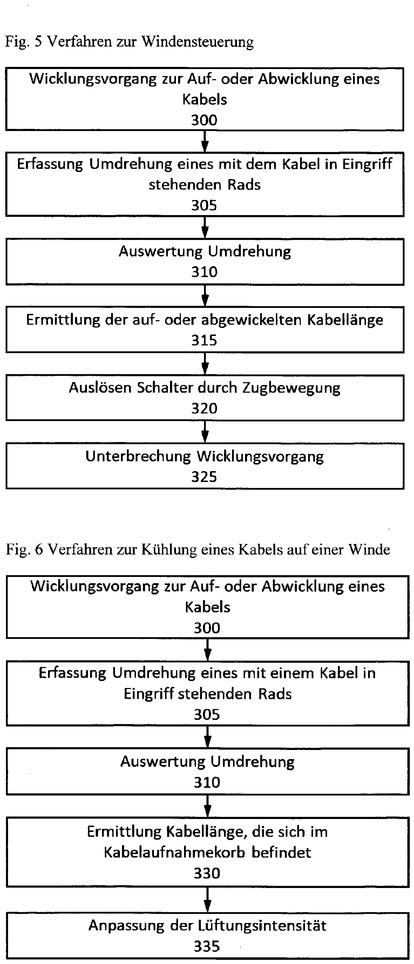

Fig. 5 stellt ein Verfahren zur Windensteuerung dar. Dabei erfolgt ein Wicklungsvorgang zur Auf- oder Abwicklung des Kabels 10 (Schritt 300), bspw. über die Kabeltransportvorrichtung 202. Es erfolgt weiter eine Erfassung der Umdrehung eines mit dem Kabel in Eingriff stehenden Rads (Schritt 305), das mit einem Winden-Encoder 222 ausgestattet ist. Bevorzugt ist dieses Rad nicht das Kabel-Antriebsrad 208. Es erfolgt eine Auswertung der Umdrehungen des Rads (Schritt 310), bspw. über die Windensteuerung 201. Darüber erfolgt die Ermittlung der Kabellänge (Schritt 315), bspw. aus Multiplikation des Radumfangs mit der Zahl der Radumdrehungen. Weiter wird ein Schalter durch Zugbewegung ausgelöst (Schritt 320), wobei es sich beim Aufwickeln um einen Kabelanfangs-Schalter 232 und beim Abwickeln um einen Kabelende-Schalter 230 handelt, die bspw. über einen Federmechanismus ausgelöst werden. Bei Auslösen des Schalters erfolgt eine Unterbrechung des Wicklungsvorgangs (Schritt 325). Während des Vorgangs kann eine Lüftung des aufgewickelten bzw. des im Kabelaufnahmekorb befindlichen Kabels 10 erfolgen.

In Fig. 6 ist eine Steuerung der Lüftungskühlung eines sich auf einer Winde 10 aufgewickelten Kabels 10 dargestellt. Die Wicklung des unter Strom stehenden Kabels 10 im Kabelaufnahmekorb 227 führt zu einer Impedanz und damit einer Verlustleistung, die in Wärme umgesetzt wird und eine Kühlung des Kabels 10 sinnvoll macht. Da sich die Winde 200 auf einem mobilen Serviceroboter 1 befindet, der nicht an einer permanenten Stromversorgung angeschlossen ist, sondern über einen Akkumulator 142 gespeist wird, ist es vorteilhaft, die Lüftung bedarfsgerecht auszugestalten, um eine möglichst lange Operationsdauer des Serviceroboters 1 zu gewährleisten, wozu nicht unnötig Leistung erzeugt werden soll. Aus diesem Grund erfolgt in einem Aspekt eine bedarfsgerechte Kühlung des aufgewickelten Kabels 10. Dabei wird angenommen, dass, je mehr Kabel aufgewickelt ist, umso mehr gekühlt werden muss. Es erfolgt demnach eine Kühlung in Form einer Intensitätsregelung des Windenlüfters 236 in Abhängigkeit von der aufgerollten Kabellänge.

Hierzu ist folgendes Verfahren auf dem Serviceroboter 1 implementiert: Es erfolgt ein Wicklungsvorgang zur Auf- oder Abwicklung des Kabels 10 (Schritt 300), bspw. über die Kabeltransportvorrichtung 202. Es erfolgt weiter eine Erfassung der Umdrehung eines mit dem Kabel in Eingriff stehenden Rads (Schritt 305), das bspw. mit einem Winden-Encoder 222 ausgestattet ist. Bevorzugt ist dieses Rad nicht das Kabel-Antriebsrad 208. Es erfolgt eine Auswertung der Umdrehungen des Rads (Schritt 310), bspw. über die Windensteuerung 201. Im nächsten Schritt 330 erfolgt eine Ermittlung der Kabellänge, die sich im Kabelaufnahmekorb 227 befindet. Dazu werden Umdrehungen bspw. des Winden-Encoders 222 ausgewertet bspw. derart, dass eine Multiplikation des Radumfangs mit der Zahl der Radumdrehungen erfolgt, die der Winden-Encoder 222 misst. Als Startpunkt der Messung kann ein Signal des Kabelanfangs-Schalters 232 dienen, bei dem bspw. das windenabseitige Führungselement 231 sich in eine Ruheposition bewegt, d.h. ein Federblatt bzw. eine Formfeder nicht mehr den Kabelanfangs-Schalter 232 auslöst. Basierend auf der ermittelten Länge des Kabels 10 im Kabelaufnahmekorb 227 erfolgt eine Intensitätsanpassung der Lüftung (Schritt 335) durch Anpassung des Stroms des Windenlüfters 336. Hierzu können, in einem Aspekt, in der Windensteuerung 201 Regeln hinterlegt sein, denen einer Kabellänge ein Windenlüfterstrom zugeordnet ist. Die Regeln können bspw. auch ein Umrechnungsfaktor von Kabellänge in Windenlüfterstrom umfassen.

Alternativ und/oder ergänzend zur Ermittlung der Kabellänge kann ein Temperatursensor 204 genutzt werden, der die Lufttemperatur im Luftstrom misst, nachdem der Strom das Kabel 10 passiert hat. Damit ist dieser Temperatursensor 204 am Rand oder außerhalb des Kabelaufnahmekorbs 227 positioniert. Hierzu können, in einem Aspekt, in der Windensteuerung 201 Regeln hinterlegt sein, denen einer gemessenen Temperatur des Temperatursensors 204 ein Windenlüfterstrom zugeordnet ist. Die Regeln können bspw. auch ein Umrechnungsfaktor von Temperatur in Windenlüfterstrom umfassen. In einem Aspekt ist diese Messung und die Ansteuerung des Windenlüfters 236 als Regelkreis ausgelegt.

Einzelne Elemente der verschiedenen Windendarstellungen können auch untereinander kombiniert werden, seien es die unterschiedlichen Windenabseitige Führungselemente 231 und Kabelanfangsschalter 232 mit den unterschiedlichen Kabel-Vortriebsvorrichtungen, den unterschiedlichen Ausführungsformen des Kabelaufnahmekorbs 227 oder aber der Sensorik und Messprinzipien für die Kabellängenmessung.

Die Kabelaufnahmevorrichtung 202 umfasst bspw. einen Kabelaufnahmekorb 227, der bspw. so angeordnet ist, dass er nach oben offen ist und das Kabel 10 durch einen Ringleger 225 im Kabelaufnahmekorb 227 abgelegt wird. In einem Aspekt umfasst die Kabelaufnahmevorrichtung 202 daher ganz oder teilweise die Bezugsbezeichnungen 227-230, 236-237 und/oder 239. Hierbei umfasst eine mit der Kabelaufnahmevorrichtung 202 assoziierte Ringlegevorrichtung 202a ganz oder teilweise die Bezugsbezeichnungen 224-226 und/oder 241-243. Die Kabeltransportvorrichtung 203 umfasst bspw. ganz oder vollständig die Bezugsbezeichnungen 205-220, 231-232, 238 und/oder 244.

### Anwendungsbeispiele

### Beispiel 1: Betrieb der Winde

Die Windensteuerung 201 steuert über den Windenmotor 207 das Kabel-Antriebsrad 208 so an, dass das Kabel 10 abgewickelt wird. Dabei wird ein Signal an die Drohne 160 gegeben, die startet. Die Drohne 160 erhebt sich in die Luft und fertigt mit ihrer mindestens einen Kamers 161 Bilder an, bspw. innerhalb eines Lagers für Inventurzwecke. Die Anordnung der Radpaare sorgt bspw. dafür, dass das Kabel 10 zwischen den Radpaaren in etwa straff gespannt ist. Durch den Winden-Encoder 222 wird die Länge des abgewickelten Kabels 10 ermittelt und ggf. einem Rechner 5 innerhalb oder außerhalb des Serviceroboters 1 zur Verfügung gestellt. Wird entweder eine Abwicklungslänge durch die Windensteuerung 201 ermittelt, bei der die mittels Encoderumdrehungen berechnete Abwicklungslänge einer in einem Speicher 6 abgelegten Länge übereinstimmt. Wird eine solche Übereinstimmung ermittelt, stoppt der Windenmotor 207. Der Speicher 6 kann sich bspw. innerhalb der Windensteuerung 201 befinden. Alternativ und/oder ergänzend kann der Stopp des Windenmotors 207 dadurch erfolgen, dass der Kabelende-Schalter 232 ausgelöst wird.

Wird das Kabel 10 wieder eingeholt, wobei sich die Drohne 160 wieder in Richtung Serviceroboter 1 bewegt, erfasst der Winden-Encoder 222 erneut die Umdrehungen eines Rads (z.B. 212) und ermittelt darüber die Länge des aufgewickelten Kabels 10. Dabei kann bspw. ein Vergleich der Länge des aufgewickelten Kabels 10 mit einem in einem Speicher 6 hinterlegten Wert erfolgen. Stimmen bspw. die Werte überein, stoppt der Aufwicklungsvorgang, indem z.B. die Stromzufuhr zu Windenmotor 207 unterbrochen wird. Alternativ und/oder ergänzend kann der der Stopp des Windenmotors 207 dadurch erfolgen, dass der Kabelanfangs-Schalter 232 ausgelöst wird.

### Beispiel 2: Windenanordnung

Ein autonomer, mobiler Serviceroboter 1 ist über ein Kabel 10 mit einer Drohne 160 verbunden, wobei das Kabel 10 über eine Winde 200 zeitweise auf- und abgewickelt werden kann und die Winde 200 über eine Kabelaufnahmevorrichtung 203 und eine Kabeltransportvorrichtung 202 verfügt sowie über mindestens einen Schalter (230, 232), der bei Auf- und/oder Abwicklung des Kabels 10 ausgelöst wird. Das Kabel 10 verfügt über mindestens eine Stoppvorrichtung 233, die bei Aufwicklung über ein gefedertes Element einen Kabelanfangs-Schalter 232 auslöst. Dabei kann das gefederte Element zugleich ein windenabseitiges Kabelführungselement 231 sein, durch welches das Kabel 10 verläuft. Dabei kann es sich z.B. um eine Kabelanfangsfeder 238 handeln. In einem Aspekt löst das Kabel 10 bei Abwicklung über ein gefedertes Element bspw. einen Kabelende-Schalter 230 auslöst, wobei es sich beim gefederten Element um eine Kabelendfeder 229 handelt. Dabei kann bspw. das Kabel 10 an der Kabelendfeder 229 durch eine Klemmverbindung fixiert sein oder durch eine Öffnung, durch die das Kabel 10 verläuft und aufgrund einer Stoppvorrichtung 233, die größer als die Öffnung ist, die Kabelendfeder 229 bewegen.

Bei der Kabelaufnahmevorrichtung 203 handelt es sich um einen runden und nach oben offenen Kabelaufnahmekorb 227, der über Kabelaufnahmekorb-Lüftungsschlitze 228 zwischen Kabelaufnahmekorb-Zinken 227a verfügt. In einem Aspekt bildet der Kabelaufnahmekorb 227 einen ringförmigen Trog, der bspw. durch Zinken dargestellt wird. Mittig im Kabelaufnahmekorb befindet sich ein Windenlüfter 236, der bspw. einen radialen Luftstrom erzeugt, der durch die Kabelaufnahmekorb-Lüftungsschlitze 228 durch den Kabelaufnahmekorb 227 strömt und das darin befindliche Kabel 10 zu Kühlungszwecken umströmt. In einem alternativen oder ergänzenden Aspekt findet eine radiale Lüftung des Kabels 10 statt durch Windenlüfter 236, die in den Zinken des Kabelaufnahmekorbs 227 angeordnet sind. Alternativ oder ergänzend können die Lüfter auch außerhalb der Winde 200 angeordnet sein, bspw. im Gehäuse des Serviceroboters 1.

Innerhalb der Kabeltransportvorrichtung 202 wird das Kabel 10 durch mindestens ein Räderpaar hindurchbewegt, bestehend aus einem Kabel-Antriebsrad 208 und einem Anpressrad 212. Ferner wird bspw. das Kabel 10 durch mindestens ein Ringleger-Führungselement 22) hindurchführt, das drehbar gelagert sein kann und z.B. über einen schräg abstehenden Ringleger 225 verfügt. Das Kabel 10 bewegt sich zwischen windenabseitigem Führungselement 231, dem mindestens einen Räderpaar und dem Ringleger-Führungselement 224 bspw. auf einer im Wesentlichen waagerechten Linie. Mindestens ein mit dem Kabel 10 in Eingriff stehendes Rad (208, 212) verfügt über einen Encoder, der von einer Windensteuerung 201 ausgewertet wird. Die Winde 200 verfügt über eine Windensteuerung 201 zur Ermittlung der abgewickelten Kabellänge. Dabei umfasst die Windensteuerung 201 Regeln zur Kalibrierung der ab- oder aufgewickelten Kabellänge mittels mindestens eines Schalters (230, 232).

### Beispiel 3: Schlupfkalibrierung

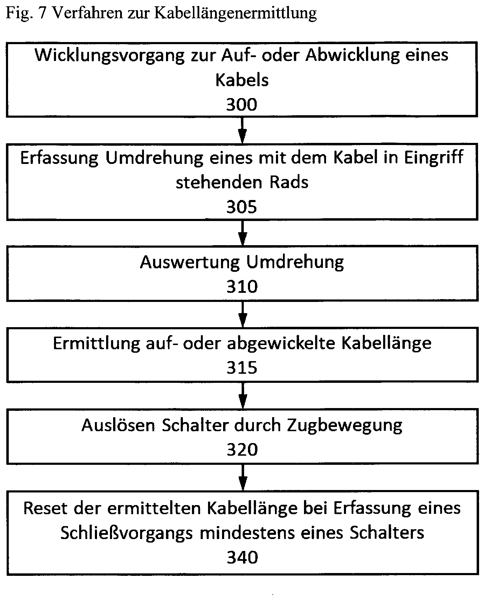

Es kann während des Wicklungsvorgangs zu Schlupf kommen, so dass die Umdrehungen des Winden-Encoders 222 zu einer unpräzisen Schätzung der auf- oder abgewickelten Kabellänge führen. Dies kann insbesondere nach mehreren Wicklungsvorgängen zu einer Addition von Fehlern und einer steigenden Messungenauigkeit führen. Aus diesem Grund erfolgt bei Auslösen des Kabelanfangs- 232 oder Kabelende-Schalters 230 ein Reset der Kabellängenposition innerhalb der Windensteuerung 201 zwecks Kalibrierung der Kabellänge. Dieses Vorgehen kann mit den anderen, in dieser Offenbarung dargelegten Abläufen kombiniert werden. Zusammenfassend stellt sich dieses Verfahren zur Ansteuerung einer Winde 200 zur Kabellängenbestimmung wie folgt in Fig. 7 dar:
a) Durchführung eines Wicklungsvorgang zur Auf- oder Abwicklung eines Kabels 10 (Schritt 300);
b) Erfassung der Auf- oder Abwicklungslänge des Kabels 10 durch eine Windensteuerung 201 (bestehend bspw. aus den Teilschritten Erfassung der Umdrehung eines mit dem Kabel 10 in Eingriff stehenden Rads (z.B. 212, 222) als Schritt 305, gefolgt von einer Auswertung der Umdrehungen des Rads (Schritt 310) sowie bspw. einer Ermittlung der auf- oder abgewickelten Kabellänge im Schritt 315 bspw. mittels Multiplikation der erfassten Umdrehungen mit dem Radumfang);
c) Auslösen eines Kabelende-Schalters 230 oder eines Kabelanfangs-Schalters 232 durch eine Zugbewegung im Schritt 320 (optional);
d) Reset der von der Windensteuerung 201 ermitteln Kabellänge bei Erfassung eines Schließvorgangs mindestens eines der Schalter (230, 232) im Schritt 340.
Der optionale Schritt c) kann durch das maximale Abwickeln des Kabels erfolgen oder durch das maximale Aufwickeln, d.h. bspw. durch ein maximales Aufsteigen der Drohne oder durch einen Landevorgang der Drohne. Steigt bspw. die Drohne maximal auf, wird der Schaltvorgang am Kabelendeschalter 230 ausgelöst und der Wert der Kabellänge auf einen abgespeicherten Wert gesetzt, der der maximalen Kabellänge entspricht.

### Beispiel 4: alternative Windenanordnung

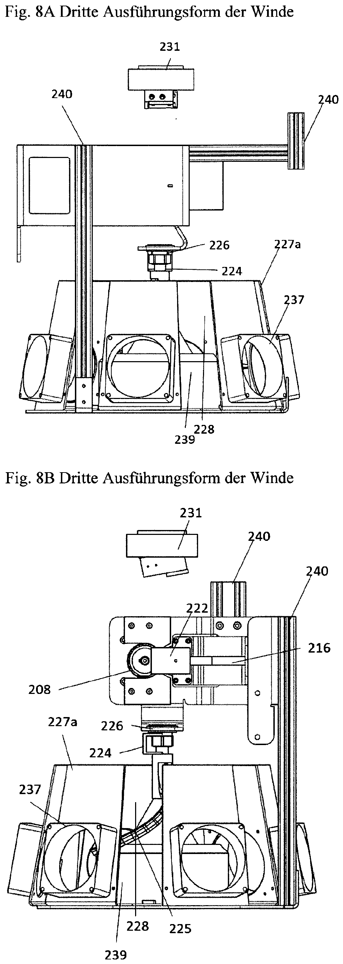

Gegenüber den voran genannten Ausführungsformen zeigt eine präferierte Ausführungsform in Fig. 8A-8F eine technisch vereinfachte Variante, die in etwa den gleichen Funktionsumfang bietet, jedoch auf Komponenten verzichtet und damit günstiger zu fertigen ist. Weiterhin kann diese Ausführungsform mit mehreren Windenlüftern 236 betrieben werden, die aufgrund ihrer Anordnung eine bessere Kühlung des Kabels 10 ermöglichen.

Fig. 8A stellt eine Seitenansicht der Winde 200 dar. Losgelöst von der Winde 200, bspw. vorgesehen für die Integration in ein Gehäuse (nicht dargestellt) befindet sich das windenabseitige Führungselement. Mittig zu erkennen ist eine Baugruppe, die über Halterungen 40 am Gehäuse befestigt wird. Unterhalb davon befindet sich als weitere Baugruppe der Kabelaufnahmekorb 227 mit den mit ihm assoziierten Elementen. Ein quasi verbindendes Element stellt das Ringleger-Führungselement 224 dar, dass an der mittleren Baugruppe über eine Halterung fixiert ist, wobei das Ringleger-Führungselement 224 über ein Ringleger-Führungselement-Lager 226 drehbar gelagert ist. Der Kabelaufnahmekorb 227 ist, wie bei den vorangenannten Ausführungsformen der Winde 200, mit Kabelaufnahmekorb-Lüftungsschlitzen 228 versehen. In den Kabelaufnahmekorb-Zinken 227a befinden sich Lüfterbauräume 237 jeweils für einen Windenlüfter 236, wobei in der dargestellten Ausführungsform pro Kabelaufnahmekorb-Zinke 227a des Kabelaufnahmekorbs 227 jeweils ein Lüfterbauraum vorgesehen ist. Damit werden also mehrere Windenlüfter 236 eingesetzt. Durch diese Anordnung wird eine intensive Belüftung des aufgewickelten Kabels 10 im Kabelaufnahmekorb 227 erreicht. Es sind selbstverständlich auch andere Lüfteranordnungen möglich. So können die Windenlüfter 236 bspw. auch außerhalb der Baugruppe des Kabelaufnahmekorbs 227 angesiedelt sein. Es können auch mehr oder weniger Windenlüfter 236 eingesetzt werden als dargestellt. Dargestellt ist auch eine Windenlüfterplatine 245 zur Ansteuerung mindestens eines Windenlüfters 236.

In Fig. 8B ist eine weitere Seitenansicht der Winde 200 dargestellt, die im Vergleich zu Fig. 8B eine Ansicht von links zeigt. Zu erkennen ist bspw. der Ringleger 225, über den das Kabel 10 in den Kabelaufnahmekorb 227 gelegt wird. Die Darstellung bietet auch eine Sicht auf den Ringleger-Führungselement 224 und dessen Ringleger-Führungselement-Lager 226. In der mittleren Baugruppe ist ferner das Kabel-Antriebsrad 208 zu erkennen. Im Gegensatz zu den anderen beiden Ausführungsformen wird hier nur ein Radpaar für den Kabelvortrieb genutzt. Damit befindet sich der Winden-Encoder 222 am Anpressrad 212, das hier durch den Winden-Encoder 222 verdeckt wird und das, über das Kabel 10, mit dem Kabel-Antriebsrad 208 indirekt in Eingriff steht. Die Position des Kabel-Anpressrads 212 wird durch ein Anpressrad-Stellglied 216 reguliert, über das zudem Druck auf das Kabel 10 ausgeübt werden kann.

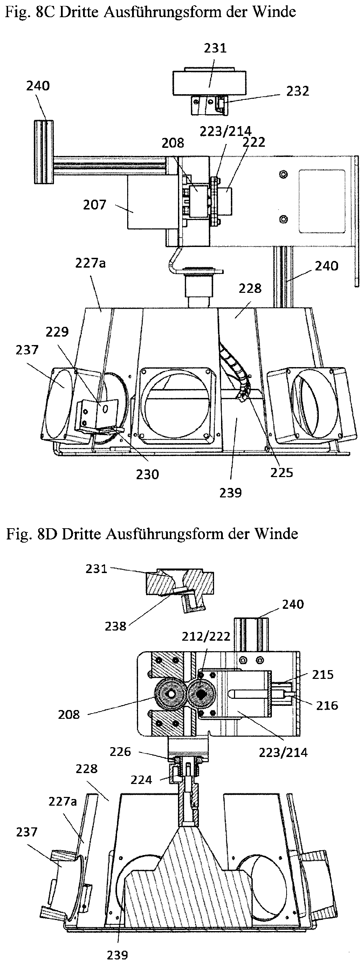

Fig. 8C stellt die rückseitige Sicht auf Fig. 8A dar. Zusätzlich zu den voran bereits bezeichneten Elementen ist in der Baugruppe, die das windenabseitige Führungselement 231 enthält, die Kabelanfangsfeder 238 zu erkennen, die bspw. in der durch Fig. 4 beschriebenen Ausführungsform identisch war mit dem windenabseitigen Führungselement 231. Zu erkennen ist bspw. am Kabelaufnahmekorb 227 das die Kabelendfeder 229 sowie der Kabelende-Schalter 230. In der mittleren Baugruppe ist zudem der Windenmotor 207 erkennbar, der das Kabel-Antriebsrad 208 antreibt. Der sich rechts davon befindliche Winden-Encoder 222 ermittelt den Drehwinkel bzw. die Umdrehungen des Anpressrads 212 (nicht erkennbar). Der Winden-Encoder 222 ist über die Winden-Encoder-Halterung 223 fixiert, die in diesem Fall identisch ist mit der Anpressrad-Halterung 214.

Fig. 8D stellt einen mittelzentrierten Schnittdurch Fig. 8B dar. Zu erkennen ist bspw. in der oberen Baugruppe im windenabseitigen Führungselement 231 die Kabelanfangsfeder 238. Zu erkennen ist ebenfalls das Anpressrad 212, das in diesem Fall identisch ist mit dem Winden-Encoder 222. Das Anpressrad 212 ist auf der Anpressrad-Halterung 214 fixiert (in diesem Fall identisch mit der Winden-Encoder-Halterung 223). Dabei ist die Anpressrad-Halterung 214 über eine Anpressrad-Linearführung 215 beweglich gelagert, wobei der Anpressdruck über das Anpressrad-Stellglied 216 eingestellt wird.

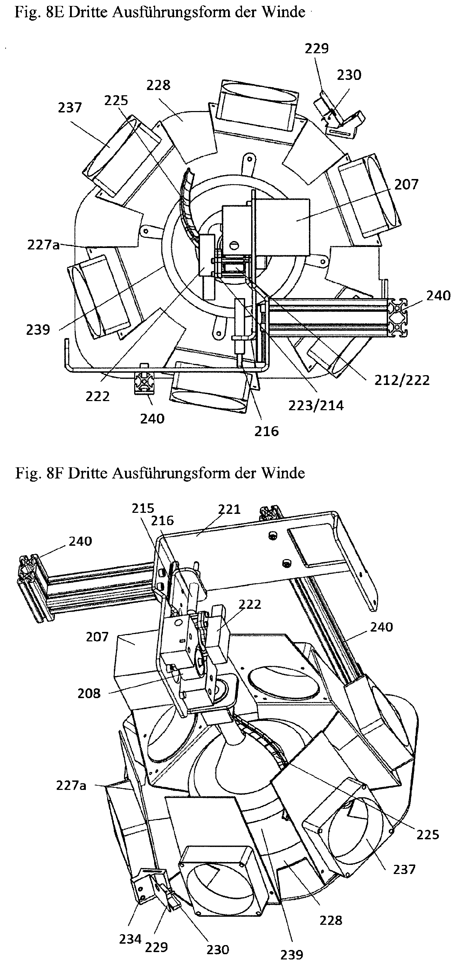

Fig. 8E stellt die Draufsicht dar. Zu erkennen ist bspw., dass der Kabelaufnahmekorb 227 mittels sechs in den Kabelaufnahmekorb-Zinken 227a befindlichen Windenlüfter 236 gekühlt wird, wobei die Windenlüfter 236 nicht dargestellt sind, sondern lediglich der jeweilige Lüfterbauraum 237. Fig. 8F stellt eine Sicht schräg von oben auf die Anordnung dar. Erkennbar hier bspw. zusätzlich die Feder-Fixierung 234 der Kabelendfeder 229. Weiterhin ist die Winden-Halterung 221 erkennbar, an der sich die Halterungen 240 befinden (bei denen es sich z.B. um ITEM-Profile handelt).

### Beispiel 5: weitere Windenanordnung

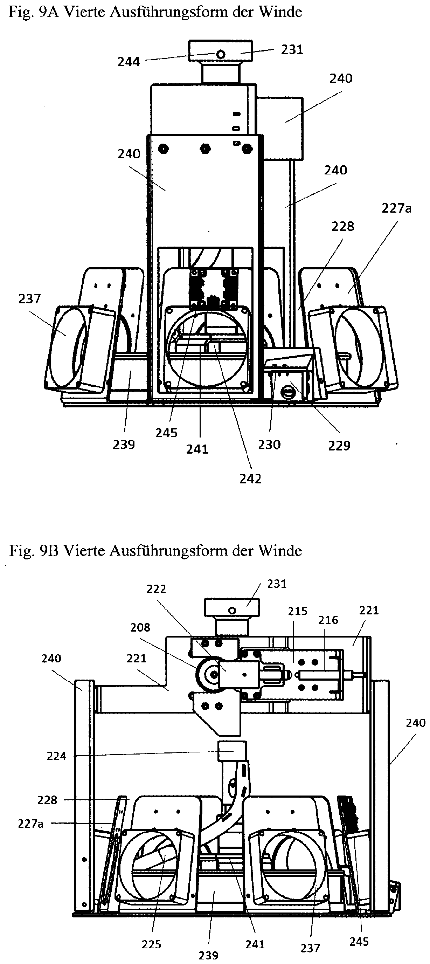

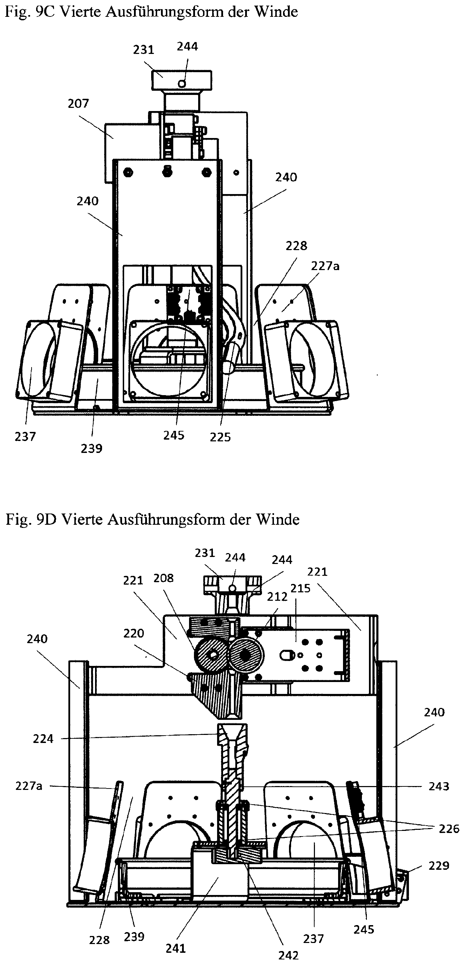

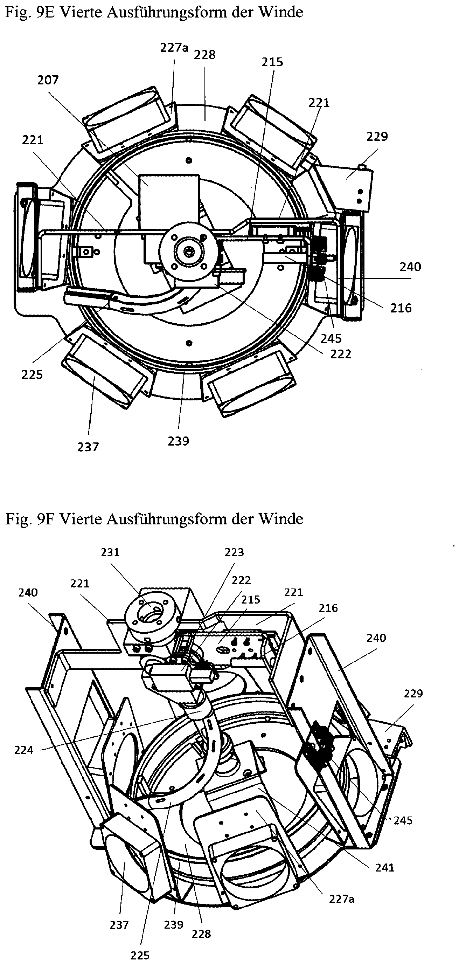

In diesem Beispiel, in Fig. 9 illustriert, wird eine vierte Windenanordnung aufgezeigt, die sich von den anderen, in diesem Dokument beschriebenen Windenanordnungen vor allem dadurch unterscheidet, dass hier mit zwei Encodern gearbeitet wird, auf jeweils unterschiedlichen Wirkmechanismen die Länge des abgewickelten Kabels 10 messen. Der erste Encoder entspricht dem Winden-Encoder 222, der mit dem Kabel 10 direkt in Eingriff steht (siehe weitere Windenanordnungen). Der zweite Encoder, der Ringleger-Führungselement-Encoder 242, erfasst Drehungen des Ringleger-Führungselements 224 bzw. der mit diesem verbundenen Ringleger-Führungselement-Encoder-Welle 243, welches wiederum durch Reibung mit dem Kabel 10 in Bewegung gesetzt wird. Damit entspricht der erste Wirkmechanismus dem direkten Kabeltransport und der zweite Wirkmechanismus der durch die Kabelreibung initiierten Drehbewegung des Ringleger-Führungselements 224. Damit dient der zweite Encoder der Messkorrektur, um zu verhindern, dass sich kleine Messfehler der Längenmessung über die Zeit (bzw. den gefahrenen Weg, aufsummieren). Der zweite Encoder ist von Natur aus ungenau, da das Kabel 10 locker im Kabelaufnahmekorb 227 liegt. Jede Schlaufe des Kabels 10 im Korb ist etwas unterschiedlich. Aber es kann sich dort in der Hinsicht kein Fehler aufsummieren, dass anstelle von bspw. einem Meter gemessener Kabel-Abwicklung tatsächlich zwei Meter Kabelabwicklung vorliegen. Die Längenmessung durch den ersten Encoder ist in hingegen sehr genau, aber Messfehler summieren sich dort auf: So können z.B. 10m Kabelabwicklung gemessen werden, tatsächlich sind es 10,01m. Wenn die Winde 50x auf 10m fährt, so beträgt die tatsächliche Länge des abgewickelten Kabels 10 bereits 10,5m, beim 100. Mal bereits 11m und damit plus 10% zur gemessenen Länge. Im diesen aufsummierten Fehler zu erkennen und zu korrigieren, wird der zweite Encoder verwendet. Beim Fahren auf 0m (d.h. der kompletten Aufwicklung des Kabels 10) bzw. beim Reinitialisieren der Winde 200 werden die Werte für die gemessene Kabellänge auf 0 zurückgesetzt und der summierte Fehler damit ebenfalls genullt.

Die Winde 200 besteht, wie die in Fig. 3 beschriebene Winde 200, über einen oberen und unteren Teil, die durch eine Halterung 240 derart miteinander verbunden sind, dass sich der oberen Teil, bestehend im Wesentlichen aus der Vortriebsvorrichtung mit dem Windenmotor 207, Kabel-Antriebsrad 208, dem ersten Encoder (Winden-Encoder 222) und seinem Anpressrad 212, das mit dem Kabel 10 in Eingriff steht. Der untere Teil umfasst im Wesentlichen den Ringleger 225, der das Kabel durch Lüfter gekühlten Kabelaufnahmekorb 227 ablegt. Dabei ist die untere Kabelaustrittsöffnung des oberen Teils der Winde 200 so angeordnet, dass sie sich direkt oberhalb des Ringleger-Führungselements 224 befindet, bspw. ohne mit ihm verbunden zu sein.

Des Weiteren gestaltet sich die vierte Ausführungsform der Winde 200 wie folgt: Fig. 9A stellt eine seitliche Ansicht auf die Winde 200 dar. Zu erkennen ist die Halterung 240, die den oberen Teil der Winde mit dem unteren (im Wesentlichen den Kabelaufnahmekorb 227 verbindet. Der Kabelaufnahmekorb 227 wiederum wird durch den Kabelaufnahmekorb-Innenring 239 einerseits und mehrere Kabelaufnahmekorb-Zinken 227a gebildet, die über einen Lüfterbauraum 237 verfügen zum Einsetzen von Windenlüftern, mit dem Ziel, das aufgewickelte Kabel 10 zu kühlen. Zwischen den Kabelaufnahmekorb-Zinken 227a befinden sich entsprechende Kabelaufnahmekorb-Lüftungsschlitze 228. Fig. 9 zeigt, im Vergleich zu anderen Figuren, Zu erkennen ist ferner die Kabelendfeder 229, die über eine Federfixierung 234 am Kabelaufnahmekorb 227 befestigt ist, die einen Kabelende-Schalter 230 auslösen kann, wenn das Kabel 10 vollständig abgewickelt ist, wie das bereits für die anderen Ausführungsformen der Winde 200 beschrieben wurde. Teilweise sind hier ferner die Ringleger-Führungselement-Encoder-Halterung 241 und der Ringleger-Führungselement-Encoder 242 erkennbar. Bei windenabseitigen Führungselement 231 und dem damit in den vorangenannten Ausführungsformen assoziierten Kabelanfangs-Schaltern 232 gibt es ebenfalls eine Abweichung: Statt eines mechanischen Schalters wird hier ein magnetisches Schaltprinzip genutzt: das windenabseitige Führungselement 231 verfügt über Reed-Kontakt-Bohrungen 244, in der Reed-Kontakte sitzen. Aus dem Kabel 10 wiederum befindet sich dann ein Magnetring als Stoppvorrichtung 233. Passiert der Magnetring in axialer Richtung die radiale Ebene innerhalb des windenabseitigen Führungselements 231, dann wird darüber ein Schaltungsvorgang ausgelöst.

Fig. 9B stellt die Sicht auf die Winde 200 von der linken Seite der Fig. 9A dar. Zu erkennen neben den bereits beschriebenen Elementen ist der Ringleger 225, über den das Kabel 10 in den Kabelaufnahmekorb 227 gelegt bzw. auch wieder entnommen wird. Das Kabel 10 wird wiederum über das Ringleger-Führungselement 224 aufgenommen und von dort in den mit diesem verbundenen Ringleger 225 umgelenkt. Im oberen Teil der Winde 200 ist zu erkennen, dass die Winden-Halterung 221 den oberen Teil der Winde 200 an der Halterung 240 fixiert. Über eine Anpressrad-Linearführung 215 wirkt das Anpressrad-Stellglied 216 auf das (hier nicht erkennbare) Anpressrad 212, dessen Rotation vom Winden-Encoder 222 erfasst wird. Das Kabel 10 wiederum wird durch das Kabel-Antriebsrad 208 bewegt. Fig. 9C stellt die rückwärtige Sicht von Fig. 9A dar. Hier ist der Windenmotor 207 erkennbar, der das Kabel-Antriebsrad 208 antreibt. Bzgl. der weiteren, durch Bezugsbezeichnungen hervorgehobenen Elemente wird an andere Stellen verwiesen.

Fig. 9D zeigt nun einen mittelzentrierten Schnitt durch Fig. 9B, der die Wirkmechanismen des Kabelantriebs und des Ringleger-Führungselement-Encoders 242 darlegt. Zu erkennen im oberen Teil ist das windenabseitige Führungselement mit den Reed-Kontakt-Bohrungen 242 ausgestattet, hier dargestellt durch zwei kreuzförmige Bohrungen, in die insgesamt vier Kontakte gesetzt werden könnten. In einem Aspekt werden dabei zwei Reed-Kontakte genutzt. Weiterhin ist die Kabelführung sichtbar, die das Kabel 10 ans Kabel-Antriebsrad 208 and das Anpressrad 212 darstellt. Im unteren Teil der Winde 200 befindet sich das drehbar gelagerte Ringleger-Führungselement 224, das im oberen Teil eine Trichterform aufweist. Die Drehbarkeit wird über mindestens ein Ringleger-Führungselement-Lager 226 sichergestellt, dargestellt sind hier zwei solche Lager. Die Rotation des Ringleger-Führungselements 224 wird dann durch den Ringleger-Führungselement-Encoder 242 abgegriffen. Die Rotationsbewegung wird hier über eine Ringleger-Führungselement-Encoder-Welle 243 zwischen Ringleger-Führungselement 224 und Ringleger-Führungselement-Encoder 242 auf letzteren übertragen. Damit steht die Rotationsachsen der beiden genutzten Encoder senkrecht aufeinander.

Fig, 9E und Fig. 9F stellen weitere Sichtweisen auf die vierte Windenanordung dar (Draufsicht in Fig. 9E und Fig. 9F schräg von der Seite bzw. oben), um die Lage der einzelnen Elemente besser zu erkennen. Hier ist z.B. erkennbar, dass der Winden-Encoder 222 über eine Winden-Encoder-Halterung 223 an der Anpressrad-Linearführung 215 fixiert ist.

### Beispiel 7: Kabel-Längenmessung mit Korrekturverfahren

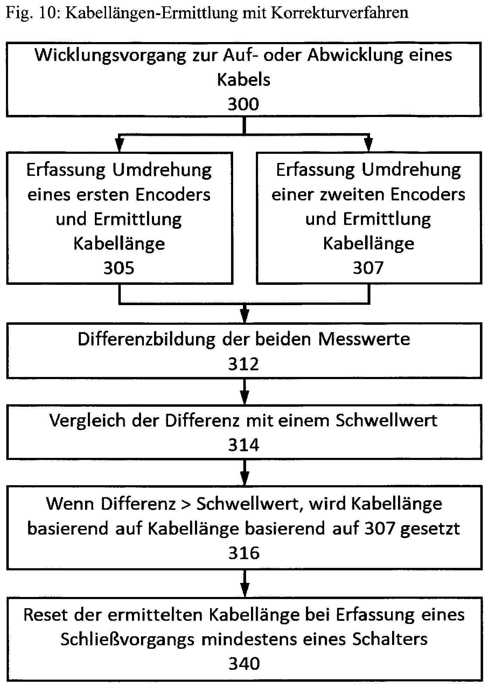

Wie im Beispiel 6 dargelegt wurde, ist die Längenmessung eines Kabels über ein Rad, das mit dem Kabel in Eingriff steht, so beschaffen, dass sie einerseits sehr genau ist, andererseits aber sich Fehler aufsummieren, weswegen ein zweiter Encoder über ein weiteres Wirkprinzip zur Längenmessung verfügt, so dass über eine gemeinsame Auswertung der Messfehler korrigiert werden kann. Die Messung der Kabellänge in Beispiel 6 erfolgt demnach dem Prozess, der in Fig. 10 dargestellt ist: Im Schritt 300 erfolgt ein Wicklungsvorgang zur Auf- oder Abwicklung des Kabels 10. Es werden hierbei im Schritt Umdrehungen eines ersten Encoders erfasst und die Länge des geförderten Kabels ermittelt. Dieser erste Encoder kann bspw. mit dem Kabel 10 direkt oder indirekt in Eingriff stehen, bspw. über ein Anpressrad 212. Parallel dazu werden Umdrehungen eines zweiten Encoders erfasst und die Länge des geförderten Kabels ermittelt (Schritt 307). Dieser steht mit dem Kabel 10 direkt oder indirekt in Eingriff, bspw. über eine Welle, z.B. die Ringleger-Führungselement-Encoder-Welle 243 in Verbindung mit dem Ringleger-Führungselement 224 und dem Ringleger 225. Die Längenermittlung des geförderten Kabels basierend auf den Encoderwerten erfolgt bspw. durch Standardisierung in Form eines einheitlichen Längenmaßes wie bspw. eine Konvertierung in mm. Es wird bevorzugt das über die Messung des ersten Encoders erfolgte Längenmaß genutzt. Es erfolgt eine Differenzbildung beider Messwerte (Schritt 312) und ein Vergleich der Differenz mit einem Schwellwert (z.B. 5mm). Liegt die Differenz über einem Schwellwert, wird die Kabellänge auf das Kabel-Längenmaß gesetzt, das über den zweiten Encoder ermittelt wurde (Schritt 316). Generell erfolgt ein Reset der ermittelten Kabellänge beim Erfassen des Schließvorgangs mindestens eines Schalters im Schritt 340, wobei es sich bei dem mindestens einen Schalter um den Kabelanfangs-Schalter 232 oder den Kabelende-Schalter 230 handelt. In einem Aspekt erfolgt die Längenmessung des Kabels 10 nur bei der Aufwicklung. Dabei kann bspw. auch ein weiterer Schwellwert festgelegt werden, ab dem die Korrektur erfolgt, z.B. 2,5 cm.

### Bezugsbezeichnungen

- 1: Serviceroboter
- 2: Roboterräder
- 3: Roboter-Antriebsräder
- 5: Rechner
- 6: Speicher
- 10: Kabel
- 100: Softwareebene
- 110: Navigationsmodul
- 111: 2D/3D-Erfassungsmodul
- 112: Pfadplanungsmodul
- 113: Kartenmodul
- 114: Selbstlokalisierungsmodul
- 115: Bewegungsplaner
- 117: Kartierungsmodul
- 118: Lademodul (automatisches Laden)
- 120: Drohnenmodul
- 121: Winden-Ansteuerungsmodul
- 122: Drohnenbildverarbeitungsmodul
- 131: Odometrie
- 132: LIDAR
- 133: Kamera
- 135: WLAN
- 136: Sicherheitssteuerung
- 137: Differentialantrieb
- 138: Bedienelemente
- 139: Ladesteuerung
- 140: Druckempfindliche Stoßstangen
- 160: Drohne
- 161: Drohnenkamera
- 180: Hardwareebene
- 200: Winde
- 201: Windensteuerung
- 202: Kabeltransportvorrichtung
- 203: Kabelaufnahmevorrichtung
- 204: Temperatursensor
- 205: Riemenscheibe-Kabelantrieb
- 206: Riemenschreibe-Motor
- 207: Windenmotor
- 208: Kabel-Antriebsrad
- 209: Anpresshebel
- 210: Anpresshebel-Stellschraube
- 211: Anpresshebel-Stellglied
- 212: Anpressrad
- 213: Anpressrad-Stellschraube
- 214: Anpressrad-Halterung
- 215: Anpressrad-Linearführung
- 216: Anpressrad-Stellglied
- 220: Kabel-Führungselement
- 221: Winden-Halterung
- 222: Winden-Encoder
- 223: Winden-Encoder-Halterung
- 224: Ringleger-Führungselement
- 225: Ringleger
- 226: Ringleger-Führungselement-Lager
- 227: Kabelaufnahmekorb
- 227a: Kabelaufnahmekorb-Zinken
- 228: Kabelaufnahmekorb-Lüftungsschlitze
- 229: Kabelendfeder
- 230: Kabelende-Schalter
- 231: Windenabseitiges Führungselement
- 232: Kabelanfangs-Schalter
- 233: Stoppvorrichtung
- 234: Feder-Fixierung
- 236: Windenlüfter
- 237: Lüfterbauraum
- 238: Kabelanfangsfeder
- 239: Kabelaufnahmekorb-Innenring
- 240: Halterung
- 241: Ringleger-Führungselement-Encoder-Halterung
- 242: Ringleger-Führungselement-Encoder
- 243: Ringleger-Führungselement-Encoder-Welle
- 244: Reed-Kontakt-Bohrung
- 245: Lüfterplatine

## Patentansprüche

1. Autonomer, mobiler Serviceroboter (1), der über ein Kabel (10) mit einer Drohne (160) verbundbar ist, wobei das Kabel (10) über eine Winde (200) des autonomen, mobilen Serviceroboters (1) zeitweise auf- und abgewickelt werden kann und die Winde (200) über eine Kabelaufnahmevorrichtung (203) und eine Kabeltransportvorrichtung (202) verfügt, über mindestens einen Schalter (230, 232), der bei Auf- und/oder Abwicklung des Kabels (10) ausgelöst wird, wobei das Kabel (10) durch mindestens ein Ringleger-Führungselement (224) der Winde (200) hindurchführt, **dadurch gekennzeichnet, dass** das Ringleger-Führungselement (224) drehbar gelagert ist und über einen schräg abstehenden Ringleger (225) verfügt.

2. Autonomer, mobiler Serviceroboter (1) nach Anspruch 1, wobei das Kabel (10) über eine Stoppvorrichtung (233) verfügt, die bei Aufwicklung einen der genannten Schalter (230, 232), nämlich einen Kabelanfangs-Schalter (232) auslöst.

3. Autonomer, mobiler Serviceroboter (1) nach Anspruch 1-2, wobei das Kabel (10) bei Abwicklung über ein gefedertes Element einen der genannten Schalter (230, 232), nämlich einen Kabelende-Schalter (230) auslöst.

4. Autonomer, mobiler Serviceroboter (1) nach Anspruch 1-3, wobei es sich bei der Kabelaufnahmevorrichtung (203) um einen nach oben offenen Kabelaufnahmekorb (227) handelt.

5. Autonomer, mobiler Serviceroboter (1) nach Anspruch 4, wobei der Kabelaufnahmekorb (227) über Kabelaufnahmekorb-Lüftungsschlitze (z.B. 228) verfügt.

6. Autonomer, mobiler Serviceroboter (1) nach Anspruch 1-5, weiter umfassend mindestens einen Windenlüfter (236) zur Kühlung des aufgewickelten Kabels (10).

7. Autonomer, mobiler Serviceroboter (1) nach Anspruch 1-6, wobei das Kabel (10) sich durch mindestens ein Räderpaar hindurchbewegt, bestehend aus einem Kabel-Antriebsrad (208) und einem Anpressrad (212).

8. Autonomer, mobiler Serviceroboter (1) nach Anspruch 1-9, wobei das Kabel (10) zwischen windenabseitigem Führungselement (231), dem mindestens einen Räderpaar und dem Ringleger-Führungselement (224) sich auf einer im Wesentlichen waagerechten Linie bewegt.

9. Autonomer, mobiler Serviceroboter (1) nach Anspruch 1-10, wobei mindestens ein mit dem Kabel (10) in Eingriff stehendes Rad (212, 208) über einen Encoder verfügt, der von einer Windensteuerung (201) ausgewertet wird.

10. Autonomer, mobiler Serviceroboter (1) nach Anspruch 1-10, wobei mindestens ein mit dem Kabel (10) in Eingriff stehendes Kabelführungselement (z.B. 224) über eine Welle (z.B. 243) mit einem Encoder in Eingriff steht, der von einer Windensteuerung (201) ausgewertet wird.

11. Autonomer, mobiler Serviceroboter (1) nach Anspruch 1-12, mit einer Windensteuerung (201) zur Ermittlung der ab- und/oder aufgewickelten Kabellänge.

12. Autonomer, mobiler Serviceroboter (1) nach Anspruch 13, wobei die Windensteuerung (201) über Regeln zur Kalibrierung der ab- und/oder aufgewickelten Kabellänge mittels dem mindestens einen Schalter (230, 232) verfügt.

## Claims

1. Autonomous, mobile service robot (1), which is connected by a cable (10) to a drone (160), where the cable (10) can be intermittently wound and unwound by a winch (200) and the winch (200) has a cable storage device (203) and a cable transport device (202), at least one switch (230, 232), which is operated on winding and/or unwinding of the cable (10), and the cable (10) is passed through at least one coiling apparatus guide element (224), **characterised in that** the coiling apparatus guide element (224) is pivoted and has a slanting protruding coiling apparatus (225).

2. Autonomous, mobile service robot (1) according to claim 1, in which the cable (10) has a stopping device (233), which on winding operates one of the named switches (230, 232), namely a cable beginning switch (232).

3. Autonomous, mobile service robot (1) according to claim 1-2, in which on unwinding the cable (10) operates one of the named switches (230, 232), namely a cable end switch (230) via a spring-loaded element.

4. Autonomous, mobile service robot (1) according to claim 1-3, in which the cable storage device (203) is a cable storage cage open at the top (227).

5. Autonomous, mobile service robot (1) according to claim 4, in which the cable storage cage (227) has cable storage cage ventilation slots (e.g. 228).

6. Autonomous, mobile service robot (1) according to claim 1-5, also including at least one winch fan (236) for cooling the wound cable (10).

7. Autonomous, mobile service robot (1) according to claim 1-6, in which the (10) moves through at least one pair of wheels, consisting of a cable drive wheel (208) and a contact wheel (212).

8. Autonomous, mobile service robot (1) according to claim 1-9, in which the cable (10) moves along an essentially horizontal line between a guide element (231) isolated from the winch, at least one pair of wheels and the coiling apparatus guide element (224).

9. Autonomous, mobile service robot (1) according to claim 1-10, in which at least one wheel (212, 208) meshed with the cable (10) has an encoder, which is evaluated by a winch control (201).

10. Autonomous, mobile service robot (1) according to claim 1-10, in which at least one cable guide element (e.g. 224) meshed with the cable (10) has a shaft (e.g. 243) meshed with an encoder, which is evaluated by a winch control (201).

11. Autonomous, mobile service robot (1) according to claim 1-12, with a winch control (201) for determining the unwound and/or wound cable length.

12. Autonomous, mobile service robot (1) according to claim 13, in which the winch control (201) has rules for the calibration of the wound and/or unwound cable length by means of at least one switch (230, 232).

## Revendications

1. Robot de service (1) autonome et mobile, qui est connecté à un drone (160) par un câble (10), le câble (10) pouvant être enroulé et déroulé temporairement sur un treuil (200) et le treuil (200) disposant d'un dispositif de réception de câble (203) et d'un dispositif de transport de câble (202), d'au moins un interrupteur (230, 232) qui est déclenché lors de l'enroulement et/ou du déroulement du câble (10), le câble (10) passant à travers au moins un élément de guidage d'annulateur (224), **caractérisé en ce que** l'élément de guidage d'annulateur (224) est logé de manière rotative et dispose d'un annulateur (225) en saillie oblique.

2. Robot de service mobile autonome (1) selon la revendication 1, le câble (10) disposant d'un dispositif d'arrêt (233) qui, lorsqu'il est enroulé, déclenche l'un desdits interrupteurs (230, 232), à savoir un interrupteur de début de câble (232).

3. Robot de service mobile autonome (1) selon la revendication 1-2, le câble (10), lorsqu'il est déroulé sur un élément à ressort, déclenchant l'un desdits interrupteurs (230, 232), à savoir un interrupteur de fin de câble (230).

4. Robot de service mobile autonome (1) selon la revendication 1-3, le dispositif de réception de câble (203) étant un panier de réception de câble (227) ouvert vers le haut.

5. Robot de service mobile autonome (1) selon la revendication 4, le panier de réception de câbles (227) disposant de fentes de ventilation de panier de réception de câbles (par exemple 228).

6. Robot de service mobile autonome (1) selon la revendication 1-5 comprenant en outre au moins un ventilateur de treuil (236) pour refroidir le câble enroulé (10).

7. Robot de service mobile autonome (1) selon la revendication 1-6, le câble (10) se déplaçant à travers au moins une paire de roues constituée d'une roue d'entraînement de câble (208) et d'une roue de pression (212).

8. Robot de service mobile autonome (1) selon les revendications 1 à 9, le câble (10) se déplaçant sur une ligne sensiblement horizontale entre l'élément de guidage côté treuil (231), la paire de roues au nombre minimum d'une et l'élément de guidage côté annulateur (224).

9. Robot de service mobile autonome (1) selon la revendication 1-10, au moins une roue (212, 208) en prise avec le câble (10) disposant d'un codeur qui est évalué par une commande de treuil (201).

10. Robot de service mobile autonome (1) selon la revendication 1-10, au moins un élément de guidage de câble (par exemple 224) en prise avec le câble (10) étant en prise avec un codeur par l'intermédiaire d'un arbre (par exemple 243) qui est évalué par une commande de treuil (201).

11. Robot de service mobile autonome (1) selon la revendication 1-12 avec une commande de treuil (201) pour déterminer la longueur de câble déroulée et/ou enroulée.

12. Robot de service mobile autonome (1) selon la revendication 13 dans lequel la commande de treuil (201) dispose de règles pour calibrer la longueur de câble déroulée et/ou enroulée au moyen de l'interrupteur (230, 232) au moins au nombre d'un.
